# DEMANDE DE BREVET EUROPEEN

(11) **EP 2 320 500 A2**
(43) Date de publication de la demande: **11.05.2011**
(21) Numéro de dépôt: 10185246.5
(22) Date de dépôt: 05.05.2006
(51) Int. Cl.: H01M 4/04, H01M 4/48, H01M 10/0525

(54) **Matériau d'électrode comprenant un oxyde complexe de lithium et de métal de transition**

(30) Priorité: 06.05.2005 CA 2506104
(62) Demande divisionnaire de: 06755473.3
(71) Demandeur: Phostech Lithium Inc., St-Bruno-de-Montarville QC J3V 6B7 (CA); Université de Montréal, Montreal QC H3C 3J7 (CA)
(72) Inventeur: Gauthier, Michel, LA PRAIRIE Québec J5R 1E6 (CA); Michot, Christophe, MONTREAL Québec H2T 2Z9 (CA)
(74) Mandataire: Blot, Philippe Robert Emile

(57) **Abrégé**

L'invention concerne un matériau d'électrode et une électrode composite comprenant ledit matériau. Le matériau d'électrode est constitué par des particules ou des agrégats de particules d'oxyde complexe LiᵢMₘM'_{m'}Z_{z}OₒNₙF_{f}. M représente au moins un élément métal de transition, M' représente au moins un métal autre qu'un métal de transition ; Z représente au moins un non métal; les coefficients i, m, m', z, o et f sont choisis de manière à assurer l'électroneutralité de l'oxyde complexe, avec i ≥ 0, m > 0, 0, m' ≥ 0, o > 0, n ≥ 0 et f ≥ 0. Au moins une partie de la surface des particules ou des agrégats de particules d'oxyde complexe est revêtue par une couche de carbone fixée par des liaisons chimiques et/ou des liaisons physiques au carbone. L'oxyde complexe réponse à la formule. ; le carbone porte des groupes fonctionnels GF fixés par liaison covalente.

## Description

La présente invention concerne des composés rédox sous forme de particules portant un revêtement de carbone modifié en surface, et leur utilisation comme matériau d'électrode.

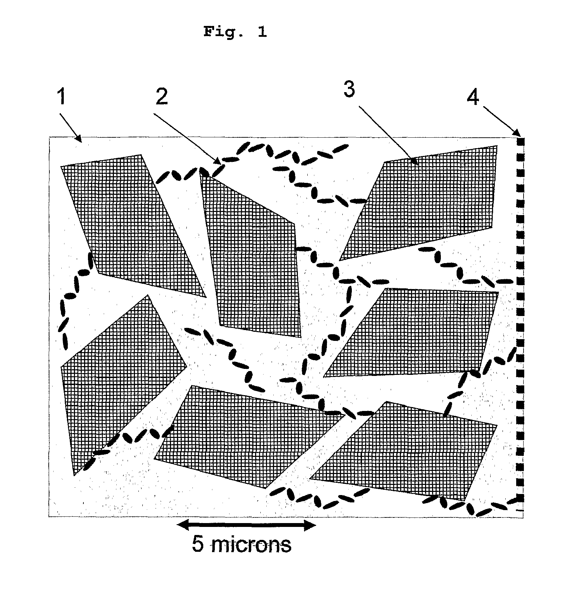

Dans le domaine des batteries lithium-ion ou des batterie lithium métal-polymère, il est connu d'utiliser des oxydes comme matière active de cathode. Des oxydes mixtes de lithium et d'un métal de transition tels que LiMn₂O₄, LiCoO₂, LiNi_{1/3}Co_{1/3}Mn_{1/3}O₂, Li(₁₊ₓ)V₃O₈ ou LiNiO₂ sont couramment utilisés dans les batteries au lithium commercialisées, ou dans des batteries prototypes. La structure de ces électrodes composites est représentée schématiquement sur la figure 1. (1) désigne le liant, (2) désigne les particules de carbone (agent conférant une conductivité électronique), (3) désigne les particules d'oxyde et (4) désigne le collecteur de courant.

L'utilisation de LiFePO₄ fait actuellement l'objet de nombreux travaux, notamment pour des questions de sécurité et de coût. (Cf. US-5,910,382, US-6,514,640, US-6,447,951 et US-6,153,333). LiFePO₄ constitue un représentant d'une famille d'oxydes complexes LiMXO₄ dans lesquels M représente un métal et X est un non métal tel que P, S ou Si. Il est entendu que cette formule englobe les oxydes complexes dans lesquels M représente un ou plusieurs métaux de transition, et est éventuellement remplacé en partie par un métal autre qu'un métal de transition, X représente un ou plusieurs éléments du type "non métal", et l'anion XO₄ est remplacé partiellement par un ou plusieurs autres oxyanions de formule XO₄, ainsi que les oxydes complexes dont la composition atomique varie légèrement autour de la stoechiométrie. Il a été démontré (US-5,910,382) que de tels oxydes complexes dans lesquels le polyanion phosphate ou le polyanion sulfate présentent une certaine structure cristalline (olivine ou Nasicon par exemple), ont une tension rédox importante pour des métaux de transition à faible coût tels que Fe ou Ti, ce qui les rend chimiquement stables et attractifs comme alternative à LiCoO₂ pour l'élaboration d'une cathodes. Cependant, la plupart de ces oxydes complexes sont des isolants électriques et ils présentent une conductivité électronique intrinsèque faible.

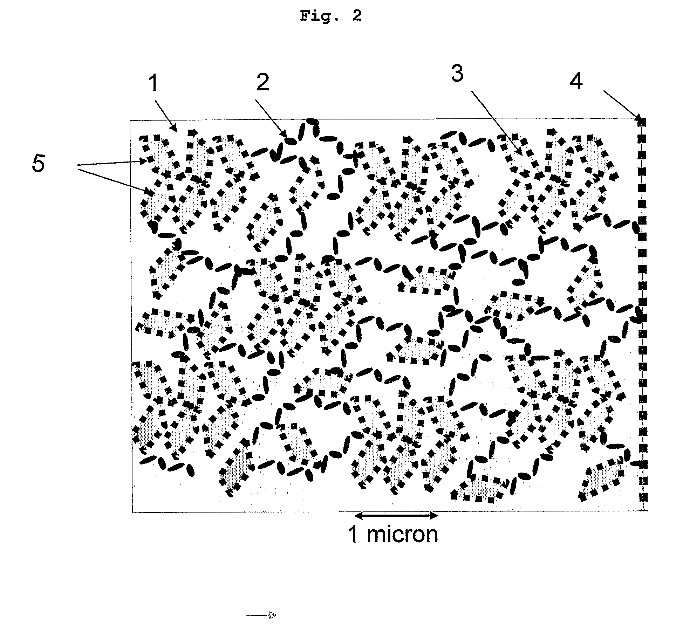

Cet inconvénient peut être surmonté en appliquant sur les particules d'oxyde complexe, un dépôt ou une couche carboné plus ou moins continu et fixé sur la surface des particules d'oxyde complexe, mais sans exclure la présence de carbone dans les grains d'oxydes complexes ou dans les agglomérats de particules, ladite couche carbonée étant obtenue par exemple par pyrolyse d'un précurseur pendant la synthèse de l'oxyde complexe ou après la synthèse de l'oxyde complexe (US-6,855,273, US6,962,666, WO-0227824 et WO-0227823), ou par mécanofusion en présence de particules de poudre de carbone (Cf. US-5,789,114 et WO 04/008560). La mise en oeuvre de ce matériau carboné sous forme d'une électrode composite est représentée schématiquement sur la figure 2. (1) désigne le liant, (2) désigne les particules de carbone (agent généralement utilisé pour conférer une conductivité électronique dans l'électrode composite), (3) désigne les particules d'oxyde complexe, (4) désigne le collecteur de courant et (5) désigne les particules de carbone liées à la surface des particules d'oxyde complexe.

Cependant, LiFePO₄ revêtu ou non d'une couche carbonée est utilisé sous forme de particules de très faibles dimensions afin d'augmenter les caractéristiques de puissance et d'en compenser la faible diffusivité des ions lithium. La surface spécifique telle que déterminée par BET est de ce fait très élevée. Elle est généralement de l'ordre de 14 m²/g [plus généralement de 5-20 m²/g pour LiFePO₄ revêtu d'une couche carbone et noté LiFePO₄-C]. A cause de cette surface spécifique élevée, la quantité de liant nécessaire pour assurer la cohésion des particules d'oxyde complexe au sein d'une électrode composite est plus grande que celle qui est requise pour assurer la cohésion de particules de LiCoO₂ qui sont plus grosses. En outre, à cause de la présence du carbone, les particules sont plus hydrophobes et donc plus difficiles à traiter pour l'élaboration d'une électrode composite.

Il existe plusieurs voies pour l'élaboration d'électrodes composites pour les batteries au lithium. Dans la technologie des batteries lithium-ions, une cathode peut être préparée par un procédé consistant à disperser dans un solvant un matériau de cathode, des particules de carbone en tant qu'un agent améliorant la conductivité et un liant, à l'appliquer sur un collecteur de courant par enduction. La cathode poreuse ainsi obtenue est ensuite imprégnée par un électrolyte liquide, y compris un électrolyte à base de liquides ioniques. Alternativement, la cathode poreuse peut être obtenue par extrusion d'un mélange comprenant un matériau de cathode, des particules de carbone et un liant. Dans la technologie des batteries Lithium métal/polymère, une cathode peut être obtenue par un procédé consistant à préparer un mélange comprenant un matériau de cathode, des particules de carbone et un polymère conducteur ionique [par exemple un dérivé de poly(oxyde d'éthylène) solvatant mélangé avec un sel de lithium tel LiN(SO₂CF₃)₂]], puis à appliquer le mélange sur un collecteur de courant, soit par enduction à partir d'une solution dans un solvant, soit par extrusion. La cathode peut également être obtenue en préparant une cathode poreuse en appliquant sur un collecteur par enduction ou par extrusion, une composition comprenant le matériau de cathode, des particules de carbone et un liant, puis en imprégnant la cathode poreuse ainsi obtenue par un polymère conducteur ionique sous forme liquide, et en faisant réticuler le polymère in situ.

L'utilisation de compositions aqueuses est largement répandue pour l'élaboration d'anodes, mais plus récente pour l'élaboration de cathodes. La mise en oeuvre de tels procédés en voie aqueuse permet en particulier de s'affranchir de l'utilisation de la N-méthyl pyrrolidone comme solvant d'enduction. (Cf. par exemple US-5,721,069, US-6,399,246, US-6,096,101, WO-04/045007, et JP-2003-157852). Des liants aqueux sont disponibles dans le commerce. On peut citer notamment le produit LHB-108P de la société LICO Technology Corp. (Taiwan, produit disponible auprès de la société Pred Materials, Etats-Unis) sous la forme d'une suspension aqueuse d'un copolymère modifié de styrène-butadiène, ou le produit BM-400B de la société Zeon Corporation (Japon), sous la forme d'une dispersion aqueuse de particules d'élastomères.

L'utilisation de particules d'oxyde complexe carboné en remplacement total ou partiel d'un mélange d'oxyde complexe et de poudre de carbone pour l'élaboration d'une cathode composite permet de limiter la quantité totale de matériau carboné, et par conséquent d'augmenter la proportion de matière active. Cependant, le développement de batteries comprenant une cathode obtenue par dépôt d'un oxyde complexe carboné est limité par de nombreux inconvénients, du fait que le revêtement de carbone appliqué sur les particules d'oxyde complexe lui confère des propriétés hydrophobes et modifie la tension superficielle, ce qui entraîne une dégradation des échanges ioniques et électroniques avec les autres constituants de la cathode composite, et modifie les propriétés physique de l'oxyde complexe, et notamment sa mouillabilité, son adhérence au liant et son aptitude à l'extrusion.

Les inventeurs ont trouvé qu'il était possible de remédier à ces inconvénients tout en conservant les avantages des particules d'oxyde complexe simplement enrobées de carbone. La solution proposée consiste à modifier la surface du carbone en fixant des groupes fonctionnels par liaison covalente ou par liaison ionique, de façon à améliorer les propriétés d'usage des oxydes complexes carbonés en mettant à profit les nombreuses possibilités offertes par les fonctions greffées à la surface du carbone. Les oxydes complexes ainsi modifiés d'une part fournissent de nouveaux types de compositions de matériaux d'électrodes composites, en mettant à profit la grande diversité des groupes fonctionnels qui peuvent être utilisés. D'autre part, ils peuvent améliorer les procédés d'élaboration des électrodes.

C'est pourquoi la présente invention a pour objet un nouveau matériau d'électrode, un procédé pour sa préparation, ainsi qu'une électrode composite comprenant ledit matériau et un générateur comprenant ladite électrode.

Un matériau d'électrode selon la présente invention est constitué par des particules ou des agrégats de particules d'un oxyde complexe qui a des propriétés rédox et qui peut insérer réversiblement le cation lithium, dans lequel au moins une partie de la surface des particules ou des agrégats de particules d'oxyde complexe est revêtue par une couche de carbone fixée par des liaisons chimiques et/ou des liaisons physiques et éventuellement par un accrochage mécanique **caractérisé en ce que** :
a) L'oxyde complexe répond à la formule LiᵢMₘM'_{m'}ZzOₒNₙF_{f} (I) dans laquelle :
   - Li, O, N et F représentent respectivement le lithium, l'oxygène, l'azote et le fluor ;
   - M représente un ou plusieurs éléments choisis parmi les métaux de transition,
   - M' représente un ou plusieurs métaux autres qu'un métal de transition ;
   - Z représente au moins un non métal ;
   - les coefficients i, m, m', z, o, n et f sont choisis de manière à assurer l'électroneutralité de l'oxyde complexe, et respectent les conditions suivantes :
      i ≥ 0, m > 0, z ≥0, m' ≥0, o > 0, n ≥ 0 et f ≥ 0
b) le carbone porte des groupes fonctionnels GF fixés par liaison covalente ;
c) La dimension des particules et des agrégats de particules d'oxyde complexe carboné est telle que au moins 90% des particules ont une dimension entre 1 nm et 5 µm, et si les particules sont présentes sous forme d'agrégats, au moins 90% des agrégats de particules ont une dimension entre 10 nm et 10 µm.

Un oxyde complexe carboné tel que défini ci-dessus sera désigné dans la suite par "matériau I"

Dans un mode de réalisation particulier, la dimension des particules et des agrégats de particules est telle que au moins 90% des particules ont une dimension entre 10 nm et 1 µm, et, si les particules sont présentes sous forme d'agrégats au moins 90% des agrégats de particules ont une dimension entre 100 nm et 10 µm.

De préférence, M représente un ou plusieurs métaux de transition M1 choisis parmi le fer, le manganèse, le vanadium, et le titane. Dans un mode de réalisation particulier, le métal ou les métaux M1 sont remplacés partiellement par un ou plusieurs métaux de transition M2 choisis de préférence parmi le molybdène, le nickel, le chrome, le cobalt, le zirconium, le tantale, le cuivre, l'argent le niobium, le scandium, le zinc et le tungstène, étant entendu que le rapport en poids des métaux M1 aux métaux M2 est supérieur à 1. Les métaux de transition M2 sont choisis soit pour leurs propriétés rédox complémentaire de celles des métaux de transition M1, soit pour leur influence sur les propriétés de conductivité électronique ou ionique de l'oxyde complexe.

Un métal M' autre que métal de transition est choisi de préférence parmi Li, Al, Ca, Mg, Pb, Ba, In, Be, Sr, La Sn et Bi. Parce que M' est inerte sur le plan rédox, sa teneur m' est de préférence inférieure à 10% en poids de l'oxyde complexe. Un métal M' est choisi pour son influence notamment sur la conduction électronique ou sur la diffusivité des ions lithium dans la structure de l'oxyde complexe partiellement substitué.

L'élément non métal Z est choisi de préférence parmi S, Se, P, As, Si, et Ge.

Une famille (II) de matériaux (I) selon l'invention comprend les matériaux qui contiennent un oxyde complexe répondant à la formule générale (I) ci-dessus dans laquelle i > 0. La présence de Li dans la composition de l'oxyde complexe de formule (I) permet la stabilisation de certaines structures de composés qui sont produits lors de la synthèse du matériau (II) et notamment lors de la carbonisation si la carbonisation est utilisée pour le dépôt du carbone sur l'oxyde complexe. Les matériaux (II) sont particulièrement utiles pour la mise en oeuvre de générateurs électrochimiques préparés à l'état déchargé ou partiellement déchargé.

Une famille (III) de matériaux (I) selon l'invention comprend les matériaux qui contiennent un oxyde complexe dans lequel z=0, et qui répond à la formule (III) LiᵢMₘM'_{m'}OₒNₙF_{f}. Les matériaux de la famille (III) présentent généralement des potentiels d'électrodes relativement faibles vis-à-vis d'une anode de lithium, en particulier lorsque le fer ou le titane constitue le métal de transition M1. Un matériau (III) est de ce fait particulièrement utile pour l'élaboration de l'anode d'un générateur au lithium rechargeable.

Un cas particulier (IIIa) de matériaux de la famille (III) est constitué par un matériau dans lequel M représente le titane. On peut citer en particulier les matériaux qui contiennent un titanate de formule LiᵢTiₘM'_{m'}OₒNₙF_{f}, plus particulièrement le titanate de formule approximative Li₄Ti₅O₁₂. Une anode constituée par un matériau de la famille (IIIa) présente des propriétés de cyclabilité remarquables lorsque les dimensions des particules de titanate recouvert de carbone sont de 1 à 100 nm par exemple. En outre, lorsque le carbone est déposé par carbonisation lors de la synthèse du matériau (IIIa), ledit carbone contribue au contrôle des tailles des particules élémentaires en empêchant le frittage de l'oxyde complexe.

Une famille (IV) de matériaux (I) selon l'invention comprend les matériaux qui contiennent un oxyde complexe dans lequel z≠0. La présence d'un non métal lié de façon covalente à l'oxygène de l'oxyde complexe contribue de manière substantielle à l'augmentation du voltage du couple rédox du métal de transition par rapport à un anode de lithium, mais il rend l'oxyde complexe isolant électriquement. Cependant, cette faible conductivité électrique est très nettement compensée par la présence du revêtement de carbone à la surface de l'oxyde complexe. L'utilisation d'un oxyde contenant un non métal permet par conséquent d'élargir considérablement le choix des matériaux d'électrode, en particulier de cathode, disponibles pour les générateurs rechargeables au lithium.

Parmi les matériaux de la famille (IV), on peut citer en particulier les matériaux qui contiennent un oxyde complexe de formule générale LiMM'ZO₄ de structure olivine et les matériaux de formule générale Li₃₊ₓ(MM')₂(ZO₄)₃ de structure Nasicon. Il est entendu que les deux formules générales ci-dessus englobent tous les oxydes complexes ayant des écarts à la stoechiométrie inférieurs à 5%, un taux d'impuretés chimiques inférieur à 2% et un taux d'éléments de substitution des sites cristallins M inférieur à 20% et les oxydes complexes dans lesquels les polyanions ZO₄ sont partiellement remplacés par polyanions molybdénate, niobate, tungstate, zirconate ou tantalate à un taux inférieur à 5%. Lesdites formules englobent également les oxydes complexes dans lesquels Z représente le phosphore et une partie de l'oxygène des structures phosphates est remplacée par de l'azote ou du fluor (c'est-à-dire 0 et/ou 0).

Un cas particulier (IVa) de matériaux de la famille (IV) est constitué par un matériau dans lequel Z représente le phosphore. Un matériau (IVa) contient un phosphate, un pyrophosphate ou un oxyphosphate. Comme exemple particulier, on peut citer les matériaux (IVa) qui contiennent Life₁₋ₓMgₓPO₄ dans lequel x varie entre 0,1% et 5% at., en particulier LiFePO₄. Un matériau (IVa) peut être élaboré en particulier avec du fer et du manganèse, qui sont des matériaux abondants et peu coûteux. L'utilisation d'un matériau (IVa) comme matériau d'électrode complexe permet néanmoins un voltage de fonctionnement élevé. Les matériaux (IVa) sont donc particulièrement avantageux comme substituts des oxydes à base de cobalt, nickel ou manganèse utilisés actuellement dans les accumulateurs rechargeables au lithium-ion. Les matériaux (IVa) en particulier lorsqu'ils contiennent du fer et du manganèse, sont par conséquent des candidats de choix pour les nouvelles générations d'accumulateurs pour les véhicules hybrides, les véhicules électriques, les outils portables et les accumulateurs de réserve stationnaires.

Un autre cas particulier (IVb) de matériaux (IV) est constitué par les matériaux qui contiennent un oxyde complexe de formule (I) dans lequel Z représente Si ou S. On peut citer en particulier les matériaux (IVb) dans lequel l'oxyde complexe est un silicate, un sulfate ou un oxysulfate dans lesquels M1 est Fe, Mg ou un de leurs mélanges. Les matériaux (IVb) ont sensiblement les mêmes propriétés et les mêmes avantages que les matériaux (IVa).

Parmi les matériaux du groupe IV, on préfère tout particulièrement ceux pour lesquels l'oxyde complexe a une structure cristalline de type olivine ou de type Nasicon et qui contient Fe ou Mn comme métal M1 principal et un oxyanion de type ZO₄ (c'est-à-dire o = 4, n = f = 0). Lesdites structures cristallines présentent des propriétés d'insertion/désinsertion réversible excellentes, et en outre elles contribuent avec les oxyanions ZO₄ à l'obtention de potentiels d'électrode élevés par rapport à une anode de lithium. Ces matériaux sont par conséquent particulièrement intéressants pour l'élaboration de cathodes.

Dans un matériau d'électrode (I) selon la présente invention, un groupe fonctionnel GF fixé par liaison covalente sur le carbone qui enrobe l'oxyde complexe répond à au moins l'un des critères suivants :
- il possède un caractère hydrophile ;
- il constitue un segment polymère ;
- il présente des propriétés rédox et/ou une conductivité électronique
- il porte ou constitue une fonction FR capable de réagir par substitution, addition, condensation ou polymérisation, ou une fonction capable d'initier des réactions de polymérisations par voie anionique, cationique ou radicalaire.

Une description plus détaillée des groupes fonctionnels GF est donnée ci-après. Certains groupes fonctionnels ayant plusieurs propriétés peuvent donc être cités dans plusieurs catégories.

Un groupe GF ayant un caractère hydrophile peut être choisi parmi les groupements ioniques et les groupements constitués par un segment polymère hydrophile. La présence de groupements GF à caractère hydrophile améliore le caractère hydrophile du matériau lui-même, ce qui entraîne une amélioration de la mouillabilité du matériau qui permet ensuite une meilleure imprégnation du matériau par un liquide (notamment par un électrolyte liquide, un liquide ionique ou un polymère solvatant liquide de faible masse); la possibilité de faire des dépôts à l'aide de compositions aqueuses ; la possibilité d'obtenir des matériaux facilement dispersés en milieu aqueux ou dans des polymères polaires ; et l'amélioration de la tension superficielle, qui favorise l'extrudabilité du matériau.

Un groupe GF à caractère hydrophile du type groupement ionique peut être choisi notamment parmi les groupes CO₂M, -OH, -SM, -SO₃M, -PO₃M₂, -PO₃M₂, -PO₂M et NH₂, dans lesquels M représente un proton, un cation de métal alcalin ou un cation organique. Un groupe GF ionique à caractère hydrophile peut être lié au carbone soit directement, soit par l'intermédiaire d'un groupe polymère. Le cation organique peut être choisi parmi les groupes oxonium, ammonium, ammonium quaternaire, amidinium, guanidinium, pyridinium, morpholinium, pyrrolidionium, imidazolium, imidazolinium, triazolium, sulfonium, phosphonium, iodonium et carbonium, lesdits groupes portant éventuellement au moins un substituant ayant une fonction FR capable de réagir par substitution, addition, condensation ou polymérisation, telle que définie précédemment.

Lorsqu'un groupement GF est destiné à améliorer la mouillabilité et/ou la dispersibilité du matériau d'électrode, M est de préférence H ou un métal alcalin. Dans ce mode de réalisation, la tension de surface du matériau est augmentée. En outre, lorsque M est un métal alcalin, les groupements ioniques jouent un rôle de tampon vis-à-vis des espèces acides qui peuvent être présentes dans un générateur électrochimique qui contient un matériau d'électrode selon l'invention. Par exemple, dans un générateur dans lequel l'électrolyte est à base de LiPF₆, HF peut être présent parce qu'il a été introduit initialement dans l'électrolyte ou parce qu'il se forme lors du fonctionnement du générateur. La réaction de HF avec par exemple des groupements -CO₂Li ou -SO₃Li conduit à la formation de LiF insoluble et de l'anion greffé sous forme acide -CO₂H ou -SO₃H, limitant ainsi les possibilités de dégradation des performances du générateur. Dans un mode de réalisation préféré de l'invention, M est Li.

Un groupe GF à caractère hydrophile peut être un groupe dérivé d'un polymère hydrophile Le groupe GF peut être par exemple un groupe dérivé d'un polyalkylène comportant des hétéroatomes tels que l'oxygène, le soufre, l'azote, en particulier un groupe dérivé de poly(oxyéthylène), de poly(éthylèneimine) ou d'alcool polyvinylique, ou un groupe dérivé d'un ionomère ayant dans sa chaîne macromoléculaire des groupes acrylate, des groupes styrènecarboxylate, des groupes styrènesulfonate, des groupes allylamine, ou des groupes alcool allylique. Dans un mode de réalisation, un groupe GF polymère hydrophile porte en outre une fonction FR capable de réagir par substitution, addition, condensation ou polymérisation telle que définie ci-après.

Un groupe GF peut être un groupe comprenant au moins un segment polymère portant éventuellement une ou plusieurs fonctions FR permettant soit une réticulation ultérieure, soit une liaison avec une autre molécule.

Un groupe GF polymère peut comprendre un ou plusieurs segments répondant aux définitions suivantes :
- un segment poly(oxyéthylène) qui peut jouer un rôle de liant et d'électrolyte ;
- un segment qui a des propriétés d'élastomère qui peut jouer un rôle de liant mécanique ;
- un segment qui a des doubles liaisons conjuguées capables d'assurer une conduction électronique.

Les fonctions FR sont telles que définies ci-après.

Lorsqu'un matériau d'électrode (I) selon l'invention porte un groupe GF qui est ou qui porte une fonction FR capable de réagir par addition, condensation ou polymérisation, les groupes FR présents sur la surface du revêtement carboné des particules d'oxyde complexe du matériau (I) permettent de lier les particules entre elles si les groupes FR sont capables de réagir entre eux. Les groupes FR permettent en outre de lier les particules d'oxyde complexe carboné du matériau (I) à d'autres constituants de l'électrode composite si lesdits constituants portent des groupes FR' capables de réagir avec les groupes FR par addition, condensation ou polymérisation. Ce mode de réalisation est intéressant dans la mesure où il permet d'appliquer aisément le matériau d'électrode complexe sur un collecteur par enduction ou extrusion, puis de conférer une tenue mécanique à l'ensemble par réaction des groupes FR et FR'. Enfin, les groupes FR permettent l'élaboration d'un matériau (I) modifié par réaction avec un composé qui a un groupe FR'. La détermination des fonctions FR et des couples FR,FR' est à la portée de l'homme de métier qui peut trouver les informations utiles dans les manuels de base de la chimie. Quelques exemples, qui n'ont aucun caractère limitatif, sont donnés dans le tableau suivant.

| | FR | >C=C< | -COOH | -OH | -NH₂ |
|---|---|---|---|---|---|
| FR' | | | | | |
| >C=C< | | -C-C- | | | |
| isocyanate | | | amide | ester | amide |
| époxyde | | | ester | éther | imine |
| aziridine | | | ester | éther | imine |
| thiaaziridine | | | ester | éther | imine |
| amine | | | amide | | |
| oxazoline | | | ester | | |
| -OH | | | ester | | |
| Cl | | | | éther | |
| double liaison activée | | | | | imine |

Les caractéristiques physiques du revêtement de carbone dépendent essentiellement du mode d'application du revêtement.

Un revêtement de carbone non poudreux adhérent à la surface des particules d'oxyde complexe est obtenu lorsque le carbone est appliqué par carbonisation d'un précurseur préalablement mis en contact avec les particules d'oxyde complexe, ou lorsque le dépôt de carbone et la synthèse de l'oxyde complexe sont effectués simultanément.

Le dépôt d'un revêtement de carbone par carbonisation d'un précurseur est décrit notamment dans US-6,855,273 et dans US-962,666. Les particules ou agrégats de particules d'oxyde complexe sont mis en contact avec un précurseur organique de carbone, puis le mélange est soumis à un traitement visant à carboniser le précurseur. Le précurseur est de préférence sous forme liquide ou gazeuse, par exemple sous forme d'un précurseur liquide, d'un précurseur gazeux ou d'un précurseur solide utilisé à l'état fondu ou en solution dans un solvant liquide. La carbonisation peut être une dismutation de CO, une déshydrogénation d'un hydrocarbure, une déshalogénation ou une déshydrohalogénation d'un hydrocarbure halogéné, une carbonisation en phase gazeuse d'hydrocarbures de préférence riches en carbone. Un tel procédé donne un dépôt de carbone qui a un bon pouvoir couvrant et une bonne adhésion aux particules d'oxyde complexe. Une carbonisation effectuée par crackage d'un hydrocarbure tel que l'acétylène, le butane, le 1-3 butadiène, le propane tel que décrit notamment dans US 2004/0157126, est favorable à l'obtention de nanotubes de carbone dans le revêtement de carbone.

Dans une variante du procédé de carbonisation, le précurseur est mélangé, préalablement à la carbonisation, avec des particules ou des fibres de carbones, incluant les nanotubes de carbone, contenant éventuellement des groupements GF, en particulier des sulfonates ou des carboxylates, permettant d'obtenir un revêtement composite.

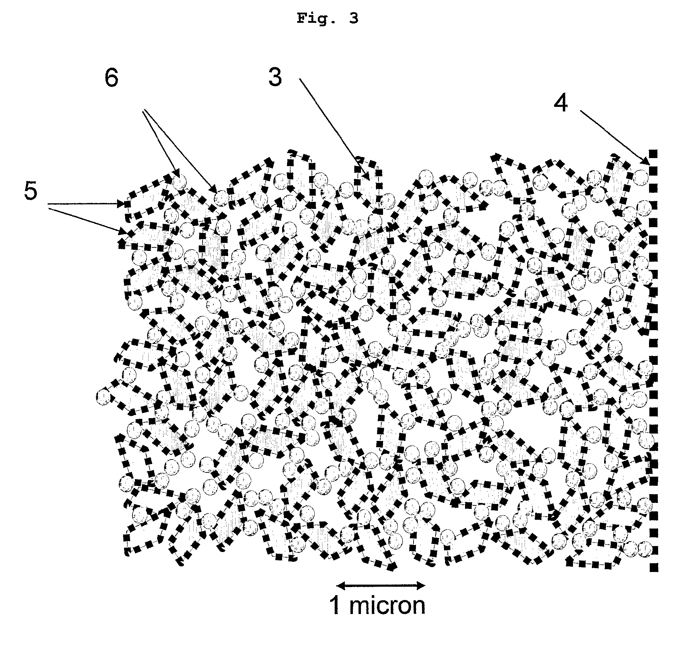

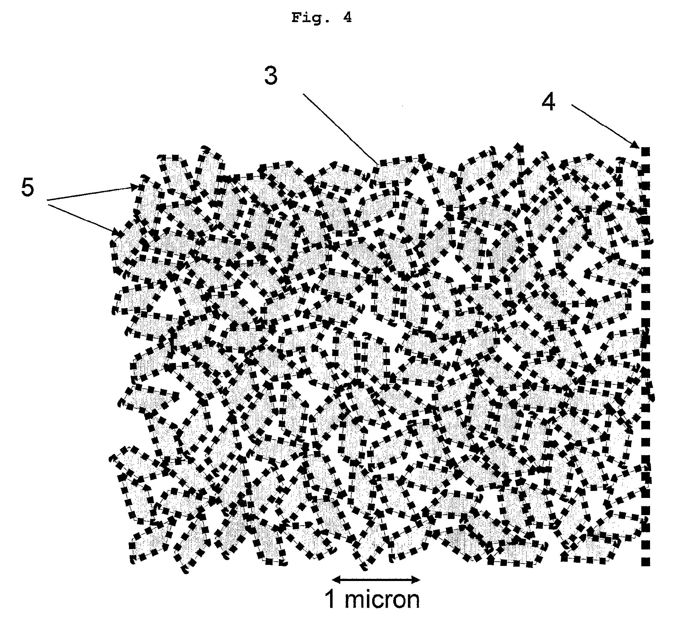

Lorsque l'oxyde est au moins légèrement poreux, le précurseur organique peut pénétrer dans les particules sur une certaine profondeur ce qui garantit un bon ancrage mécanique avant ou lors de la carbonisation. Un recouvrement partiel ou total de la surface par le précurseur peut être observé à partir du carbone résiduel après carbonisation comme illustré sur les figures 3 et 4. Les figures 3 et 4 représentent chacune une micrographie TEM obtenue à l'aide d'un spectromètre GIG de la société Gatan pour un LiFePO₄ carboné. Au-delà de l'ancrage mécanique résultant d'un revêtement de carbone qui épouse le profil de surface des particules d'oxyde complexe ou qui pénètre au coeur des particules de l'oxyde complexe, les interactions chimiques ou physiques développées lors de la carbonisation entre la surface de l'oxyde complexe et le carbone renforcent l'attachement du revêtement de carbone.

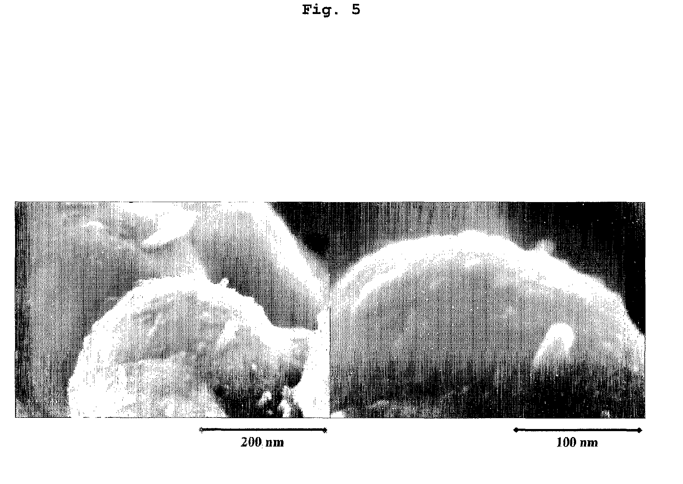

Dans un mode de réalisation particulier, le revêtement de carbone comporte des nanotubes de carbone. Ce mode de réalisation favorise l'ancrage d'un polymère avec le revêtement carboné de l'oxyde complexe. La structure nanotube d'un revêtement carboné est décrite plus en détail par Henry J. Liu et al, [Applied Physic Letters, vol. 85, 5, pp 807-809, 2004], et S. H. Jo et al, [Applied Physic Letters, vol. 85, 5, pp 810-812, 2004]. La présence de nanotubes est visible sur la micrographie de la figure 5. La synthèse de nanotubes à la surface du matériau peut être effectuée simultanément à la carbonisation ou après la carbonisation. Un revêtement de carbone qui comporte des nanotubes de carbone peut être obtenu par la carbonisation ou le crackage d'hydrocarbures gazeux en présence de l'oxyde complexe, de préférence en présence de fer, de cobalt ou de nickel dans des conditions connues de l'homme du métier (Cf. [Lee CJ, Kim DW, Lee TJ, et al., Applied Physics Letters, Vol. 75, 12, pp. 1721-1723, 1999], [Yuan Chen, Dragos Ciuparu, Yanhui Yang, Sangyun Lim, Chuan Wang, Gary L Haller and Lisa D Pfefferle, Nanotechnology, Vol. 16, 2005, S476-S483], et [Mark Meier, Energeia, Vol.12, N°6, 2001, publication de l'Université du Kentucky]).

Dans un autre mode de réalisation, le revêtement de carbone en contact intime avec la surface des particules d'oxyde complexe est obtenu par mécanofusion. Un revêtement déposé par mécanofusion présente un caractère poudreux qui n'est pas observé sur un revêtement de carbone déposé par carbonisation d'un précurseur organique. L'adhésion du carbone déposé par mécanofusion avec la surface de l'oxyde complexe est obtenue par mécano-liaison du carbone avec la surface de l'oxyde complexe. La mécano-liaison se fait probablement entre autres par des liaisons physiques ou des liaisons chimiques qui résultent du travail mécanique intense et du renouvellement de la surface de l'oxyde complexe en contact intime avec le carbone.

Un procédé par mécanofusion est décrit en détail dans US-5,789,114. Les particules ou agrégats de particules d'oxyde complexe sont mis en contact avec une poudre de carbone, et le mélange est soumis à un traitement mécanique qui crée des mécanoliaisons entre les particules d'oxyde complexe et les particules de carbone. Un mode de réalisation particulier du procédé par mécanofusion consiste à utiliser des particules de carbone qui portent des groupes fonctionnels GF, en particulier des groupes carboxylate ou sulfonate. Des dispositifs permettant de réaliser une telle mécanofusion sont disponibles dans le commerce, en particulier auprès des sociétés Hosokawa Micron Group (Japon) et Nara Machinery Co., Ltd. (Japon)..

La détermination qualitative des groupes fonctionnels à la surface du revêtement de carbone des particules d'oxyde complexe peut être effectuée par la technique XPS pour les groupes oxygénés tels que COOH, OH et CHO, le groupe phosphonate ou les groupes soufrés -SH, -SO₃H (Cf. Pantea, D., Darmstadt, H., Kaliaguine, S., Summchen, L., Roy, C., Carbon, Vol. 39, pp 1147-1158, 2001). Des taux de greffage de 0,0001 à 1 meq de fonctions GF par gramme de matériau greffé, de préférence de 0,001 à 0,2 meq/g, et plus particulièrement de 0,01 à 0,1 meq/g sont considérés comme efficaces. Toutefois, l'invention n'est pas limitée à ces taux. L'évaluation du changement de propriétés (en particulier des propriétés de mouillage, effet mécanique sur la composite ou détection des fonctions transformées) est un bon indicateur du caractère suffisant ou non du taux de greffage.

Un matériau I selon l'invention comprend de 0,1 à 10% de carbone, plus particulièrement de 0,5 à 5%. Selon le procédé mise en oeuvre pour le dépôt du carbone, le revêtement de carbone est plus ou moins couvrant et adhérent à la surface des particules ou des agglomérats de particules d'oxyde complexe. L'épaisseur du revêtement de carbone est généralement de l'ordre du nanomètre à quelques centaines de nanomètres. La répartition du carbone à la surface de l'oxyde complexe ou dans la masse de l'oxyde complexe peut être contrôlée par la forme du précurseur organique : précurseur liquide, gazeux, polymérisable ou sous forme d'organométallique.

Un matériau I constitué par des particules d'un oxyde complexe ou des agrégats de particules d'oxyde complexe dans lequel au moins une partie de la surface des particules ou des agrégats de particules d'oxyde complexe est revêtue par du carbone fixée par des liaisons chimiques et/ou des liaisons physiques et éventuellement par accrochage mécanique, peut être obtenu par un procédé **caractérisé en ce qu**'il comprend :
a) La préparation de particules ou d'agrégats de particules d'un oxyde complexe tels que au moins 90% des particules ont une dimension entre 1 nm et 5 µm et au moins 90% des agrégats de particules ont une dimension entre 10 nm et 10 µm, ledit oxyde complexe répondant à la formule LiᵢMₘM'_{m'}Z_{z}OₒNₙF_{f} dans laquelle :
   - Li, O, N et F représentent respectivement le lithium, l'oxygène, l'azote et le fluor ;
   - M représente un ou plusieurs éléments choisis parmi les métaux de transition,
   - M' représente un ou plusieurs métaux autres qu'un métal de transition ;
   - Z représente au moins un élément autre qu'un métal ;
   - les coefficients i, m, m', z, o, n et f sont choisis de manière à assurer l'électroneutralité de l'oxyde complexe, et respectent les conditions suivantes :
      i ≥ 0, m > 0, z ≥0, m' ≥0, o > 0, n ≥ 0 et f ≥ 0 ;
b) le dépôt de carbone sur au moins une partie de la surface des particules ou des agrégats de particules d'oxyde complexe ou sur au moins une partie de la surface des précurseurs des particules ou des agrégats de particules de l'oxyde complexe ;
c) la fixation de groupes fonctionnels GF par formation d'une liaison covalente avec le carbone ; étant entendu que les étapes peuvent être effectuées successivement ou simultanément.

Dans un mode de réalisation, les phases a), b) et c) sont effectuées en trois étapes successives. Au cours d'une 1^{ère} étape, on prépare l'oxyde complexe. Au cours d'une seconde étape, on applique le revêtement carboné sur les particules ou les agrégats de particules d'oxyde complexe. Au cours d'une 3^{ème} étape, on soumet les particules ou les agrégats de particules carbonées à un traitement visant à fixer des groupes fonctionnels GF.

L'étape de préparation de l'oxyde complexe peut être supprimée pour des oxydes complexes disponibles dans le commerce. La préparation des oxydes complexes est à la portée de l'homme de métier, au vu des nombreuses publications de l'art antérieur. (Cf. WO-05/062 404, US-5,910,382, US-6,514,640, US-2002/0124386, US-6,855,462 et US-6,811,924).

Dans un 1^{er} mode de mise en oeuvre de la synthèse en 3 étapes successives, particulièrement préféré, le revêtement carboné est appliqué par carbonisation d'un précurseur.

Dans une variante du 1^{er} mode de mise en oeuvre de la synthèse en 3 étapes successives, le précurseur est mélangé, préalablement à la carbonisation, avec des particules ou des fibres de carbone, incluant les nanotubes de carbone, contenant éventuellement des groupements GF, en particulier des sulfonates ou des carboxylates. On obtient ainsi un revêtement carboné composite.

Dans un 2^{ème} mode de mise en oeuvre de la synthèse en 3 étapes successives, l'application du revêtement carboné peut être effectuée par mécanofusion.

Dans un autre mode de réalisation, la préparation des particules ou des agrégats de particules d'oxyde complexe et le dépôt de carbone sont effectués simultanément, et la fixation des groupes GF est effectuée sur le matériau "oxyde complexe carboné" ainsi obtenu. Le matériau "oxyde complexe carboné" peut être obtenu par exemple en effectuant la synthèse du l'oxyde complexe à partir des précurseurs de l'oxyde complexe et d'un ou plusieurs précurseurs de carbone. Le précurseur de carbone peut être choisi de sorte à constituer également un précurseur de l'oxyde complexe, par exemple un sel ou un composé organométallique comprenant un ou plusieurs des constituants de l'oxyde.

Dans un autre mode de réalisation, on forme simultanément un dépôt de carbone et des groupes GF sur des particules ou des agrégats de particules d'oxyde complexe préparés au préalable. Ce mode de réalisation est particulièrement utile lorsque les groupes GF souhaités sont des groupes carboxylate, hydroxyle, cétone ou aldéhyde. Le résultat est obtenu par un choix approprié des conditions de synthèse et de carbonisation et des précurseurs organiques. Dans un mode de réalisation préféré de l'invention, le greffage des groupes carboxylate, hydroxyle, cétone ou aldéhyde est obtenu par oxydation du carbone par le CO₂, éventuellement en présence de vapeur d'eau. Il peut être intéressant dans ce cas de choisir des précurseurs de carbone plus facilement oxydables afin de favoriser le greffage de groupes GF. Le précurseur de carbone peut également être mélangé avec des sels métalliques facilitant l'oxydation du revêtement de carbone et pouvant éventuellement servir d'agent dopant à l'oxyde complexe [Cf. "Chemically modified carbon fibers and their applications" I. N. Ermolenko, I. P. Lyubliner, and N. V. Gulko, translated by Tivovets, E. P. ([VCH, New-York and Germany, 1990, pp 155-206)]

Les étapes a), b) et c) du procédé de préparation du matériau I peuvent être effectuées simultanément lorsque les groupes GF souhaités sont des groupes carboxylate, hydroxyle, cétone ou aldéhyde. Le procédé consiste alors à préparer un mélange de précurseurs de l'oxyde complexe et d'un précurseur de carbone et à oxyder C par CO₂.

Dans le cas particulier des titanates Li₄Ti₅O₁₂, qui sont des oxydes complexes stables à l'air à des températures élevées, la carbonisation peut être effectuée sous air ou oxygène éventuellement en présence de vapeurs d'eau, contrairement à des composés comme LiFePO₄. Il est de ce fait possible d'introduire des fonctions carboxylate ou des fonction hydroxyle par oxydation sous air ou oxygène à 500-900°C, soit du titanate préalablement formé et enrobé ultérieurement par un précurseur de carbone, soit lors de la synthèse du titanate, par exemple par réaction de TiO₂ avec LiOH en présence d'un précurseur de carbone vers 800°C.

Le greffage de groupes fonctionnels sur un matériau carboné est largement décrit dans l'art antérieur. On pourra se référer par exemple à JP-2002/053768, EP-1 078 960, US-2004/138 342, US-2001/036 994, US-6 503 311, US-2003/101 901, US-2002/096 089, US-2004/018 140, US-2003/180 210, US-2004/071 624, ainsi qu'à "Chemically modified carbon fibers and their applications" I. N. Ermolenko, I. P. Lyubliner, and N. V. Gulko, translated by Tivovets, E. P. [VCH, New-York and Germany, 1990, 304 pp], à "Plasma surface treatment in composites manufacturing", T. C. Chang, [Journal of Industrial Technology, Vol. 15, N° 1, November 1998 to January 1999], et à D. Pantea et al., [Applied Surface Science, 217, 2003, pp 181-193]. Ces documents décrivent des procédés pour détecter, et/ou caractériser et/ou modifier des groupes présents sur la surface de carbone. La caractérisation de la surface du carbone est effectuée en particulier par spectroscopie infra-rouge, de masse, XPS, Raman, Auger et par thermogravimétrie (TGA).

Certains groupes fonctionnels GF désignés ci-après par groupes GF1, peuvent être greffés directement sur un matériau carboné. Comme exemples de groupes GF1, on peut citer COOM, CO, CHO, SO₃M (M étant un H ou un métal alcalin) et les groupes amino. D'autres groupes fonctionnels GF désignés par GF2 peuvent être obtenus à partir des groupes GF1 par des réactions de transformation, de substitution, d'addition, de condensation ou de polymérisation.

Quelques exemples de procédés de fixation de groupes GF1 et de transformation de groupes GF1 en groupes GF2 sont donnés ci-après à titre purement illustratif. Bien entendu, l'invention n'est pas limitée à ces cas particuliers.

De manière générale, des groupes GF1 tels que la fonction cétone, la fonction aldéhyde, la fonction quinone, la fonction -COOH ou la fonction -OH peuvent être obtenues directement sur la surface de carbone par une oxydation contrôlée. Une fonction -SO₃H, ou une fonction amine NH₂ peuvent être obtenues directement sur la surface de carbone par exemple par une réaction avec SO₃ ou NH₃.

Les groupes GF1 ci-dessus permettent de fixer des groupes GF utiles pour les matériaux d'électrode. En outre, les fonctions -COOH, -OH, -SO₃H, -PO₃H₂, -PO₂H et -NH₂ sont directement utiles comme groupes GF hydrophiles pour les matériaux d'électrode.

Il existe de nombreuses voies pour fixer sur un oxyde complexe carboné, un groupe -CO₂H dans lequel H peut ensuite être remplacé par des procédés d'échange de cation à la portée de l'homme de métier. La fixation de -COOH peut être effectuée notamment par les procédés suivants :
a) oxydation de l'oxyde complexe carboné par CO₂ à une température de 500°C-900°C ;
b) traitement de l'oxyde complexe carboné par plasma froid sous O₂ ;
c) traitement de l'oxyde complexe carboné par plasma froid sous CO₂ ;
d) diazotation de l'oxyde complexe carboné par un composé portant un groupe -COOH, par exemple l'acide aminobenzoïque ;
e) réaction d'addition Diels-Alder de l'oxyde complexe carboné avec un acide contenant une liaison insaturée -C=C- ou -C≡C-, par exemple l'acide fumarique ou HCO₂-C≡C-CO₂H ;
f) réaction de l'oxyde complexe carboné avec l'anhydride maléïque, suivie par une hydrolyse ;
g) réaction d'addition avec un disulfure, un benzotriazole ou un composé azo, chacun de ces composés portant un groupe -COOH.
h) réaction avec l'acide benzoïque, puis avec un nitrite d'un groupe organique pour obtenir un groupe acide carboxylique
g) traitement sous argon à 600°C, d'un mélange de poudre d'oxyde complexe et d'une dispersion de noir de carbone portant des fonctions -COOH mélangée préalablement avec un précurseur organique, par exemple dans une solution polyvinyl alcool/eau, suivi de l'élimination de l'eau.

La fixation simultanée de groupes -OH et de groupes -COOH peut être obtenue par exemple par traitement de l'oxyde complexe carboné par la vapeur d'eau sous un courant d'un mélange CO/CO₂ à 700°C, ou par un traitement plasma froid sous O₂.

Un groupe -SO₃M dans lequel M représente H ou un métal alcalin peut être fixé sur la surface carbonée de l'oxyde complexe par différentes voies. M peut ensuite être remplacé par des réactions connues d'échange d'ions. Les modes opératoires suivants sont cités à titre d'exemples.
a) réaction de l'oxyde complexe carboné avec un disulfure portant deux groupes -SO₃M terminaux ;
b) réaction de l'oxyde complexe carboné avec un benzotriazole portant un groupe SO₃H ;
c) réaction d'addition avec un composé azo portant des groupements sulfonate de métal alcalin.
d) réaction avec l'acide bezènesulfonique, puis avec un nitrite de métal alcalin pour obtenir un groupe sulfonate de métal alcalin, ou avec un nitrite d'un groupe organique pour obtenir un groupe acide sulfonique.

Un groupe amine peut être fixé sur un oxyde complexe carboné par réaction de l'oxyde complexe carboné avec un benzotriazole portant un groupe amine ; par réaction d'addition Diels-Alder de l'oxyde complexe carboné avec un composé contenant une liaison insaturée -C=C- ou -C=C- et portant au moins une amine ; ou par la réaction d'un diazonium portant un groupement nitro (par exemple dérivé du p-aminonitrobenzène) suivie de la réduction du -NO₂ en -NH₂.

Un groupe cétone, aldéhyde ou quinone peut être fixé sur un oxyde complexe carboné par réaction de l'oxyde complexe carboné respectivement avec CO₂ ou de la vapeur d'eau, et leur mélange.

Un groupe phosphonate peut être fixé par réaction avec PCl₃ suivie d'une hydrolyse, ou par des réactions similaires à celles qui sont mises en oeuvre par la fixation d'un groupement sulfonate, en utilisant des précurseurs portant des groupements phosphonates à la place des groupements sulfonates (benzotriazole, azo, -C=C-, -C≡C-, diazonium).

De manière générale, les oxyde complexes carbonés portant des groupes GF1 du type carboxyle, hydroxyle, sulfonate, phosphonate ou amine peuvent être utilisés pour préparer des oxydes complexes carbonés portant des groupements GF du type GF2, par réaction avec un composé portant le groupe GF2 et une fonction réactive. Des exemples de réactions mettant en jeu un groupe GF1 peuvent être trouvés dans le tableau I ci-dessus.

De nombreuses autres réactions peuvent en outre être envisagées, notamment :
- La polymérisation d'un monomère par voie cationique initiée par le groupe -COOH ou un groupe carboxylate de métal alcalin, qui fixe un groupe polymère.
- La fixation d'un groupement azoïque sur un groupe -COOH par une liaison amide forme un groupe amorceur de polymérisation radicalaire qui permettra ensuite d'initier une polymérisation radicalaire visant à fixer sur le carbone un groupe GF du type polymère par exemple à partir d'un monomère vinylique, allylique, acryliques ou styrène.
- Une réaction d'échange d'ions à l'aide d'un halogénure approprié permet de remplacer l'ion initial d'un groupement ionique (par exemple un groupe -COOLi ou un groupe -S03Li) fixé sur le carbone de l'oxyde complexe carboné, par un ion organique comprenant le substituant GR2 souhaité.

Chacune des réactions ci-dessus permet ainsi de fixer par exemple un groupe GF2 comprenant une double liaison éthylénique terminale, un groupe époxy terminal, ou un groupe GF2 constitué par un segment polymère, portant éventuellement un groupe réactif.

La modification de la surface d'un matériau carboné par greffage de groupes polymères est connue notamment par N. Tsubokawa ["Functionalization of carbon black by surface grafting of polymers", Prog. Polym. Sci., 17, 417 (1992)] et ["Functionalization of Carbon Material by Surface Grafting of Polymers", Bulletin of the Chemical Society of Japan, Vol. 75, No. 10 (October, 2002)].

Un matériau I selon la présente invention, constitué par des particules ou des agrégats de particules d'oxyde complexe carboné portant des groupes GF est particulièrement utile pour l'élaboration d'électrodes composites, qui constituent un autre objet de la présente invention.

Une électrode composite selon l'invention est constituée par un matériau composite déposé sur un collecteur de courant, ledit matériau composite comprenant un matériau I, et éventuellement un liant et/ou un agent conférant une conductivité électronique et/ou un agent conférant une conductivité ionique.

Dans un mode de réalisation préféré de l'invention, le matériau I utilisé pour l'élaboration de l'électrode porte des groupes GF à caractère hydrophile.

Le composé qui confère une conductivité électronique est choisi de préférence parmi le noir de carbone, le noir d'acétylène, le graphite ainsi que leurs mélanges. Le carbone conducteur électronique peut être introduit sous la forme de poudre, de microfibres ou de nanotubes, ainsi que leurs mélanges.

Le composé qui confère une conductivité ionique peut être choisi parmi les sels de lithium utilisés dans les électrolytes des batteries au lithium, par exemple LiClO₄, LiPF₆, LiFSI ou LiTFSI en solution dans un solvant liquide aprotique (tel que EC, DEC, DMC, PC,...), un solvant liquide ionique (tel que par exemple un bis(trifluorosulfonyl)imidure d'imidazolium ou un fluorosulfonylimidure de pyrrolidinium) ou un polymère solvatant tel que par exemple un dérivé de poly (oxyde d'éthylène), ou un mélange de ces solvants utilisé pour la réalisation d'électrolytes gélifiés.

Dans un 1^{er} mode de réalisation, une électrode selon l'invention est constituée par un matériau composite déposé sur un collecteur de courant, ledit matériau composite comprenant un matériau I, un liant, et éventuellement un agent conférant une conductivité électronique

Dans une 1^{ère} variante du 1^{er} mode de réalisation, le liant est incorporé au matériau I par mélange mécanique en présence d'un solvant. Le liant est choisi de préférence parmi les caoutchoucs naturels et les caoutchoucs synthétiques tels que les caoutchoucs SBR (styrène butadiène rubber), NBR (butadiène-acrylonitrile-rubber), HNBR (NBR hydrogénés), CHR (épichlorhydrines rubber) et ACM (acrylate rubber). Dans le matériau d'électrode, le liant est en contact avec la majeure partie de la surface des particules ou agrégats d'oxyde complexe carboné fonctionnalisé.

Dans une 2^{ème} variante du 1^{er} mode de réalisation, le matériau I est incorporé au liant par dispersion. Dans ce cas, l'électrode est obtenue par un procédé **caractérisé en ce que** :
- Le matériau I porte des groupes GF qui sont ou qui portent une fonction FR facilitant la dispersion des particules ou agrégats d'oxydes complexe carboné fonctionnalisé, et des groupes GFa qui sont ou qui portent une fonction FRa capable de réagir par addition ou condensation ;
- Le liant porte des groupes réactifs GA capables de réagir par addition ou condensation avec les groupes FRa du matériau I ;
- Les particules ou agrégats de particules de matériau I sont dispersés dans une suspension colloïdale de nanoparticules de liant ;
- La dispersion est enduite sur un substrat qui constitue le collecteur de courant de l'électrode ;
- La dispersion est soumise à un traitement visant à faire réagir les fonctions FR avec les groupes GA.

Le liant est choisi de préférence parmi les caoutchoucs naturels et les caoutchoucs synthétiques tels que les caoutchoucs SBR (styrène butadiène rubber), NBR (butadiène-acrylonitrile-rubber), HNBR (NBR hydrogénés), CHR (épichlorhydrines rubber) et ACM (acrylate rubber).) On obtient ainsi une électrode constituée par une couche de matériau composite sur un collecteur de courant, ledit matériau composite étant constitué de particules ou agrégats de particules d'oxyde complexe carboné reliés à des nanoparticules de liant par les liaisons créées par la réaction entre les fonctions FR et les groupes GA. La structure d'un tel matériau composite est représentée schématiquement sur la figure 5. Sur la figure 5, (3) représente les particules d'oxyde complexe, (5) représente l'enrobage de carbone, (4) représente le collecteur de courant, (6) représente les nanoparticules de liant.

Dans un mode de réalisation préféré de l'invention, les nanoparticules de liant ont un diamètre < 50 nm, et plus particulièrement < 25 nm. Les nanoparticules de liant présentent de préférence un Tg < 0°C, et plus particulièrement < -20°C. Des nanoparticules dérivant de polymères siliconés forment une classe particulière permettant l'obtention de polymères à bas Tg. Les liants du type latex sont disponibles dans le commerce, et peuvent être obtenus par polymérisation en émulsion de monomères éthyléniques, acryliques, styréniques (Cf. US-6,656,633).

Dans un cas particulier des diverses variantes du 1^{er} mode de réalisation, le matériau I comporte en outre des groupes GF à caractère hydrophile qui favorisent sa mouillabilité, ce qui facilite la dispersion du matériau I dans le solvant (organique ou aqueux) de la suspension de liant.

Dans un 2^{ème} mode de réalisation, une électrode selon l'invention est constituée par un matériau composite déposé sur un collecteur de courant et comprenant un matériau I qui porte des groupes GF du type polymère et éventuellement des groupes GF qui ont un caractère hydrophile.

Dans ce deuxième mode de réalisation, il n'est pas nécessaire que le matériau composite formant l'électrode contienne un liant, parce que les groupes GF du type polymère jouent eux-mêmes le rôle de liant. L'intégrité structurale de l'électrode pendant les cyclages est assurée par les groupes GF polymères. Lesdits groupes GF polymères sont choisis pour leur propriétés mécaniques et d'élastoméricité afin d'assurer la tenue mécanique de l'électrode composite et le maintien des contacts électriques lors des cycles de décharge et de charge. Le choix approprié des monomères utilisés pour constituer le groupe polymère en outre d'apporter d'autres fonctions utiles au matériau d'électrode et ainsi d'optimiser les caractéristiques de l'électrode composite. A titre d'exemple non limitatif, les polymères sont constitués de préférence par un segment poly(oxyéthylène), qui en présence d'un sel de lithium jouera le rôle de conducteur électrolytique. Alternativement, le choix d'un polymère comportant des segments à doubles liaisons conjuguées conférera au matériau d'électrode des propriétés de conduction électronique, ce qui permettra de supprimer tout en partie des poudres de carbone généralement utilisés comme additifs de conduction électronique.

De manière générale, il est à la portée de l'homme de métier de choisir les groupes GF appropriés pour optimiser les densités d'énergie et de puissance de l'électrode composite par la diminution de la quantité de la matière non active (liant, additifs de conduction électronique, électrolyte ...), ainsi que pour en optimiser les propriétés mécaniques, les propriétés de cyclage et de mise en oeuvre.

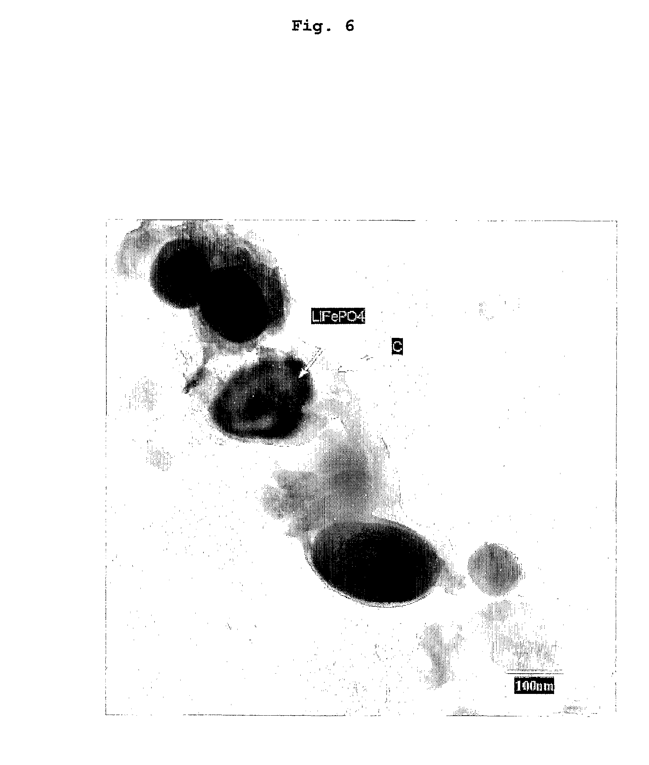

Dans un 3^{ème} mode de réalisation, une électrode selon l'invention est constitué par un matériau composite qui est déposé sur un collecteur de courant et qui est constitué par des particules d'oxyde complexe enrobées par du carbone et reliées entre elles par liaison covalente ou par liaison ionique. La structure d'un tel matériau composite est représentée schématiquement sur la figure 4. Sur la figure 6, (3) désigne les particules d'oxyde complexe, (5) désigne l'enrobage de carbone, (4) désigne le collecteur de courant. Les particules d'oxyde complexe sont reliées entre elles à très courte distance par les groupes de liaison fixés au carbone. De préférence, ces groupes de liaison ont des propriétés d'élastomère afin d'assurer le maintien des contacts électrochimiques entre les constituants de l'électrode composite. Dans ce 3^{ème} mode de réalisation, le matériau I porte des groupes GR constitués par un chaînon solvatant ou un chaînon conjugué portant la fonction réactive FR. Ce mode de réalisation d'une électrode composite selon l'invention minimise ou supprime les constituants autres que l'oxyde complexe afin d'augmenter au maximum la densité d'énergie et de puissance de l'électrode composite et du générateur qui la comprend.

Une telle électrode est obtenue par un procédé **caractérisé en ce que** :
- Un matériau composite est préparé à partir d'un matériau I porte des groupes GF qui sont ou qui portent une fonction FR capable de réagir par addition ou condensation avec une fonction identique ;
- Le matériau composite est appliqué sur un substrat qui constitue le collecteur de courant de l'électrode ;
- Le matériau composite est soumis à un traitement visant à faire réagir les fonctions FR entre elles.

Lorsque l'oxyde complexe du matériau d'électrode est LiFe₁₋ₓMgₓPO₄ dans lequel x varie entre 0,1% et 5% at., en particulier LiFePO₄, une électrode selon la présente invention est particulièrement utile comme cathode. Les fonctions greffées par liaison covalente sur le carbone sont dans ce cas avantageuseument choisies parmi -COOH, >C=O, -OH et -CHO

Lorsque l'oxyde complexe est un titanate de formule LiᵢTiₘM'_{m'}OₒNₙF_{f}, plus particulièrement Li₄Ti₅O₁₂, une électrode selon l'invention est particulièrement utile comme anode.

La présence de groupes hydrophiles, (en particulier des groupes acide carboxylique, acide sulfonique, sulfonate ou carboxylate (de préférence sulfonate ou carboxylate de lithium) sur la surface du carbone facilite la dispersion de l'oxyde complexe et l'élaboration d'électrodes composites, qu'il s'agisse de préparation par voie solvant, y compris les solvants aqueux, ou par extrusion. Lors d'une extrusion, la présence de ces fonctions hydrophiles permet de diminuer la viscosité dynamique du mélange contenant l'additif de conduction électronique et le polymère solvatant, ce qui facilite la mise en oeuvre et améliore les propriétés électrochimiques des électrodes ainsi obtenues. Lorsque le liant de la cathode est utilisé sous la forme d'une suspension colloïdale aqueuse de nanoparticules de polymères (latex), la possibilité d'obtenir de bonnes dispersions du matériau d'électrodes permet de préparer des électrodes dans lesquelles les nanoparticules sont uniformément réparties à la surface des particules ou des agrégats d'oxydes complexes, ce qui améliore les performances des électrodes ainsi obtenues. La présence de groupes hydrophiles, (en particulier des groupes acide carboxylique, acide sulfonique, sulfonate ou carboxylate de préférence de lithium) sur la surface du carbone facilite la dispersion de l'oxyde complexe et l'élaboration d'électrodes composites, qu'il s'agisse de préparation par voie solvant, y compris les solvants aqueux, ou par voie d'extrusion.

En outre, les groupes hydrophiles améliorent la mouillabilité des particules d'oxyde complexe carboné, ce qui facilite la pénétration des électrolytes (liquides, liquides ioniques, polymères solvatants de faible masse) dans des électrodes poreuses. L'optimisation des formulations s'en trouve facilitée dans la mesure où l'oxyde complexe carboné en surface et comportant des groupes hydrophiles peut permettre de réduire, voire de supprimer le carbone de conduction généralement utilisé en dispersion avec le liant de l'électrode composite. La présence de groupements ioniques tels -COOH, -PO₂H₂, -PO₃H₂, -NH₂, -SO₃H, ou -OH, permet en outre des échanges ioniques à la surface du carbone.

La présence de groupes GF polymérisables, condensables, ou réticulables ouvrent de nombreuses possibilités d'optimiser les propriétés du liant de l'électrode composite. Ces fonctions permettent notamment d'accrocher chimiquement les particules ou agrégats de particules du matériau actif au liant de la composite, permettant ainsi d'en minimiser les quantités nécessaires. Les groupes GF polymérisables peuvent en outre jouer directement le rôle de liant mécanique entre les particules au sein de l'électrode composite. Les groupes GF polymères peuvent aussi être choisis de façon à ajouter une seconde fonction utile au matériau d'électrode. Par exemple, un groupe GF polymère de type polyoxyde d'éthylène permet de jouer un rôle d'électrolyte en présence d'un sel de lithium ; un groupe GF polymère de type conjugué permet à la fois d'assurer les échanges électroniques avec le matériau d'électrode et de jouer le rôle de liant mécanique de l'électrode composite.

La présence de groupements polymères sur le matériau d'électrode de la présente invention permet d'améliorer la dispersibilité de particules d'oxyde composite carboné dans les solvants organiques ou aqueux, ainsi que dans les solvants polymères, suivant la nature des segments polymères. On peut ainsi obtenir dans certains cas des suspensions stables dans le temps de particules de carbone ultrafines.

L'accrochage chimique du matériau d'électrode au liant de la composite permet d'en réduire la quantité nécessaire pour sa tenue mécanique et son comportement en cyclage. Le rôle additionnel de conducteur électrolytique ou électronique joué par le liant et rendu possible par la présente invention permet d'optimiser les densités d'énergie, de puissance et de cyclabilité des électrodes composites et des générateurs.

Il apparaît ainsi que la présente invention ouvre une nouvelle voie de production d'électrodes qui conservent les avantages des électrodes de l'art antérieur, tout en supprimant ou tout au moins en minorant leurs inconvénients. Les potentiels rédox intéressants des oxydes complexes sont conservés, mais sans la faible conductivité électronique. La bonne conductivité électronique apportée par les enrobages de carbone est conservée, sans les inconvénients liés à leur caractère hydrophobe. La bonne diffusivité des ions Li⁺ dans les particules très fines d'oxyde complexe est conservée, sans la faible cohésion des matériaux inhérente à la faible dimension des particules. L'utilisation d'oxydes carbonés fonctionnalisés par des groupes réticulables permet d'assurer la cohésion du matériau, avec des quantités nulles ou très faibles de liant ajouté, au profit de la matière active.

Ces avantages et d'autres apparaîtront clairement à la lecture des exemples suivants qui décrivent des cas particuliers auxquels l'invention n'est cependant pas limitée.

La présente invention est illustrée par les exemples suivants, auxquels elle n'est cependant pas limitée.

Les exemples la à 14a décrivent la préparation d'oxydes complexes carbonés modifiés par greffage de groupes du type GF1.

Les exemples 1b à 12b décrivent la modification des fonctions GF1 greffées sur un oxyde complexe carboné.

Les exemples 1c à 9c décrivent la préparation de matériaux d'électrode, et leur utilisation dans des batteries.

Dans les exemples :
- C-LiFePO₄ désigne de manière générale un matériau constitué par des particules ou des agrégats de particules de phosphate de Fe et de Li portant un revêtement de carbone ;
- C-LiFePO₄(PL) désigne un matériau constitué par des particules ou agrégats de particules de phosphate de Fe et de Li portant un revêtement de carbone, dont les particules ont une dimension moyenne (d₅₀) de 2,7 µm et qui est fourni par la société Phostech Lithium Inc, Canada ;
- C-LiFePO₄ (Al) désigne un matériau constitué par des particules ou agrégats de particules de phosphate de Fe et de Li portant un revêtement de carbone, dont les particules ont une dimension moyenne (d₅₀) de 2,9 µm et qui est fourni par la société Aldrich ;
- C-Li₄Ti₅O₁₂ désigne de manière générale un matériau constitué par des particules ou des agrégats de particules de titanate de Li portant un revêtement de carbone ;
- MC-LiFePO₄ désigne de manière générale un matériau constitué par des particules ou des agrégats de particules de phosphate de Fe et de Li portant un revêtement de carbone portant des groupes GF.
- Le titanate nanométrique Li₄Ti₅O₁₂, dont les particules ont une surface de l'ordre de 130 m²/g, est fourni par la société Altair Nanotechnologies, USA ;
- Le FePO₄•2H₂O est fourni par la société Budenheim (Allemagne) ;
- Le séparateur microporeux est fourni par la société Celgard ;
- L'électrolyte LiPF₆ EC:DMC est fourni par la société Tomiyama Pure Chemicals ;
- Le Noir de carbone FW200 est fourni par Degussa, Allemagne ;
- Les particules de graphite EBN-1010 sont commercialisées par la société Superior Graphite, USA.
- Les produits suivants utilisés ont été obtenus auprès de la société Aldrich : anhydride maléique, Fe₂O₃, (NH₄)₂PO₄, acide benzotriazole-5-carboxylique, méthacrylate de glycidyle, acide benzène-1,2,4,5-tétracarboxylique, composé Orange G azo portant des groupes SO₃Na, lithium thiocyanate 1,3-dicyclohexyl carbodiimide DCC ; chlorure de 1-éthyl-3-méthylimidazolium, poly(éthylèneglycol) méthacrylate Mₙ ≈ 526, alcool allylique du 1,2-butoxylate-block-ethoxylate HLB 6.9, l'éther couronne 18-crown-6, 4-styrènesulfonate de sodium, 3,4-éthylènedioxythiophène (EDOT), triflate de bismuth ;
- Li₂CO₃ est fourni par la société Limtech, Canada ;
- Le noir d'acétylène est fourni par la société Chevron Phillips Chemical Company ;
- Le 5-amino-benzotriazole est fourni par la société Lancaster Synthesis Ltd ;
- L'éther monallyl polyalkylène glycol A 20-20 est fourni par la société Clariant ;
- L'éther de polyoxyéthylène alkylphényle Noigen® RN-40 est fourni par Dai-Ichi Kogyo Seiyaku Co., Japon ;
- le 1-butyl-1-méthylpyrrolidinium est fourni par Merck, Allemagne ;
- le chlorure de 1 diallyldiméthylammonium et le chlorure de (2-méthylpropénoyloxyéthyl)triméthylammonium sont fournis par Ciba Chemical Specialities, Suisse ;
- Jeffamine M-2070 (copolymère monoamine oxyde d'éthylène/oxyde de propylène), Surfonamine^{®} L-300 (polyéther monoamine) et le poly(oxyéthylène)diamine XTJ-502 ayant une M_{w} = 2130 sont commercialisés par la société Huntsman, USA ;
- TYZOR TPT ® (tétraisopropyle titanate) commercialisé par la société Dupont ;
- l'épichlorhydrine est fournie par ABCR GmbH & Co. KG ;
- le chlorure de 2,2'-Azobis[2-méthyl-N-(2-hydroxyéthyl)-propionamide] et le chlorure de 2,2'-azobis[2-(2-imidazolin-2-yl)propane] sont fournis par la société Wako, Japon), et sont transformés en sel de bis(trifluorométhanesulfonyl)imide par échange ionique dans l'eau ;
- le diacrylate de polyéthylène glycol (600) est fourni par la société Sartomer, France ;
- la polyoxazoline EPOCROS WS-700 est fourni par Nippon Shokubai, Japon ;
- le copolymère styrène-butadiène modifié LHB-108P est produit par LICO Technology Corp., Taiwan, et commercialisé par Pred Materials International Inc., USA)
- l'aziridine est fournie par ABCR GmbH & Co, KG ;
- le latex BM-400B est produit par la société Zeon Corporation, Japon.

### Exemple 1a

On a traité 200 g de C-LiFePO₄(PL) pendant 24 heures sous reflux dans une solution de 20 g d'anhydride maléique dans 600 ml de toluène. Le produit récupéré après filtration a été lavé plusieurs fois au toluène, puis séché sous vide à 80°C pendant 24 h. On a obtenu un matériau MC-LiFePO₄ portant des groupes anhydride -C(=O)-O-C(=O)-.

Une partie de ce matériau a été traité par un solution aqueuse de LiOH pour donner un matériau MC-LiFePO₄ portant des groupes -COOLi, et une autre partie de ce matériau a été traité par un solution aqueuse de KOH pour donner un matériau MC-LiFePO₄ portant des groupes -COOK.

### Exemple 2a

On a introduit 100 g de C-LiFePO₄(PL) dans une solution aqueuse contenant 5 g de disulfure LiSO₃-φ-S-S-φ-SO₃Li et on a mélangé soigneusement. Après élimination de l'eau, on a chauffé le produit pendant 4 h à 180°C sous argon, puis on a lavé au Soxhlet sous argon pendant une nuit, puis séché sous vide à 80°C pendant 24 h. On a obtenu un matériau MC-LiFePO₄ portant des groupes sulfonate de lithium.

### Exemple 3a

On a préparé LiFePO₄ en faisant fondre dans un creuset en graphite à 1000°C sous argon pendant 1 h, 1 mole de Fe₂O₃, 2 moles de (NH₄)₂HPO₄, et 1 mole de Li₂CO₃. On a obtenu LiFePO₄ avec un taux de pureté de 94% (déterminé par DRX).

Ce composé a ensuite été transformé en particules ayant une dimension de 2 µm dans un broyeur planétaire. La poudre obtenue a été mélangée dans un mortier en alumine, avec 4% en poids de noir d'acétylène, puis le mélange a été traité par mécanofusion à 1000 t/min pendant 1 heures pour produire un matériau C-LiFePO₄ portant un revêtement de noir d'acétylène. Le matériau C-LiFePO₄ a ensuite été traité pendant 2 h à 700°C par de la vapeur d'eau sous un flux gazeux de CO/CO₂. On a ainsi obtenu un MC-LiFePO₄ portant des groupes -OH et des groupes -COOH.

### Exemple 4a

On a reproduit le mode opératoire de l'exemple 3a en utilisant 3% en poids de noir de carbone FW200 au lieu de 4% de noir d'acétylène. On a ainsi obtenu un MC-LiFePO₄ portant des groupes -COOH.

### Exemple 5a

On a préparé une poudre de LiFePO₄ selon le mode opératoire de l'exemple 3, puis on a mélangé cette poudre avec une dispersion de noir de carbone FW200 dans une solution aqueuse de PVA, la quantité de FW200 et la quantité de PVA représentant respectivement 2% et 5% en poids de la quantité de LiFePO₄. Après élimination de l'eau, le mélange résiduel a été traité à 600°C pendant 1 h sous argon. On a obtenu un MC-LiFePO₄ portant des groupes -COOH.

### Exemple 6a

50 g de C-LiFePO₄(Al) ont été traités par plasma micro-onde (2,45 GHz, 300 W) pendant 30 secondes sous une pression de 1 mbar de O₂ pur. On a obtenu un MC-LiFePO₄ portant des groupes -COOH et -OH.

### Exemple 7a

### Échantillon 1

Dans un mortier en alumine, on a mélangé une poudre de LiFePO₄ avec 4% en poids de noir d'acétylène, puis on a soumis le mélange à une mécanofusion avec une vitesse de rotation de 1000 t/min, pour obtenir un C-LiFePO₄. 50 g de matériau ont ensuite été soumis à reflux pendant 8 h dans 300 ml d'une solution aqueuse dégazée contentant 2 g d'acide δ-(1-benzotriazolyl)-butanesulfonique. Le résidu obtenu après filtration a été lavé plusieurs fois à l'eau, et on a obtenu un MC-LiFePO₄ portant des groupes -SO₃H.

### Échantillon 2

On a mis en oeuvre le procédé de l'échantillon 1, mais en remplaçant l'acide δ-(1-benzotriazolyl)-butanesulfonique par l'acide benzotriazole-5-carboxylique, et on a obtenu MC-LiFePO₄ portant des groupes -COOH.

### Échantillon 3

On a mis en oeuvre le procédé de l'échantillon 1 en remplaçant l'acide δ-(1-benzotriazolyl)-butanesulfonique par le 5-amino-benzotriazole et on a obtenu MC-LiFePO₄ portant des groupes amino.

### Échantillons 4 à 6

On a mis en oeuvre le procédé de chacun des échantillons 1 à 3 ci-dessus, mais en utilisant le matériau C-LiFePO₄(PL) à la place du matériau C-LiFePO₄ préparé in situ, pour obtenir des matériaux MC-LiFePO₄ portant respectivement des groupes SO₃H, -COOH et amino.

### Exemple 8a

On a préparé LiFePO₄ par précipitation à partir à partir de LiH₂PO₄, Fe(S0₄)₂•7H₂O et LiOH comme précurseurs, tel que décrit dans l'exemple 4 de US 2004/0151649. On a imprégné le matériau LiFePO₄ obtenu par du lactose, puis on a soumis à une carbonisation par un traitement thermique consistant à chauffer à partir de la température ambiante jusqu'à 725°C avec une vitesse de 3°C/min sous atmosphère d'azote, et en maintenant à la température de 725°C sous azote pendant 12 h. On a ensuite introduit 200 g du composé C-LiFePO₄ dans l'eau et on a mélangé pendant 30 min avec 5 g d'un composé Orange G azo comportant des groupes SO₃Li (obtenu par échange d'ions à partir du composé Orange G azo portant des groupes SO₃Na). Après évaporation du solvant, on a irradié 3fois pendant 1 min dans un four à micro-ondes à 700 W. Le matériau MC-LiFePO₄ obtenu a ensuite été lavé durant la nuit dans un extracteur Soxhlet, puis séché sous vide à 80°C pendant 24 h. Le matériau obtenu porte de groupes SO₃Li.Le mode opératoire ci-dessus a également été mis en oeuvre avec l'acide azobenzène-4-carboxylique, pour obtenir un matériau MC-LiFePO₄ portant des groupes -COOH.

### Exemple 9a

### 1^{er} échantillon

On a chauffé sous reflux 100 g de C-LiFePO₄(PL) dans 500 ml d'eau sous agitation, on a ajouté 17,3 g d'acide 4-aminobenzènesulfonique, puis 17,3 g de nitrite de potassium en plusieurs fois. Après 30 min sous reflux, on a refroidi le milieu réactionnel et on l'a centrifugé. Le produit récupéré a été lavé plusieurs fois à l'eau dans un bain à ultra sons, puis séché sous vide à 80°C pendant 24 h. On a obtenu un matériau MC-LiFePO₄ portant des groupes -SO₃K.

### 2^{ème} échantillon

Le mode opératoire du 1^{er} échantillon a été reproduit en utilisant 13,7 g d'acide 4-aminobenzoïque, et on a obtenu un matériau MC-LiFePO₄ portant des groupes -CO₂K.

### 3^{ème} échantillon

Le mode opératoire du 1^{er} échantillon a été reproduit, en utilisant le nitrite de lithium. On a obtenu un matériau MC-LiFePO₄ portant des groupes -SO₃Li.

### 4^{ème} échantillon

Le mode opératoire du 1^{er} échantillon a été reproduit en utilisant 13,7 g d'acide 4-aminobenzoïque et du nitrite de lithium, et on a obtenu un matériau MC-LiFePO₄ portant des groupes -CO₂Li.

Pour chacun des échantillons obtenus ci-dessus, on a introduit 500 mg dans 10ml d'eau et on a traité aux ultrasons pendant 2 min. La dispersion obtenue reste stable après 5 min, alors qu'un matériau non tratié a décanté.

### Exemple 10a

### 1er échantillon

On a préparé un matériau C-Li₄Ti₅O₁₂ par la technique sol-gel en utilisant le tétra(isopropoxyde) de titane (28.42 g), et l'acétate de lithium deshydraté (35.7 g dans 300 mL d'un mélange isopropanol-eau 80:20. Le gel blanc résultant a été séché dans un four à 80°C et calciné à 800°C à l'air pendant 3 heures, ensuite sous argon comprenant 10% d'hydrogène, à 850°C pendant 5 heures. 10 g de la poudre résultante ont été mélangés dans 12 mL d'une solution 13% en poids d'acétate de cellulose dans l'acétone. La pâte a été séchée et le polymère carbonisé sous atmosphère inerte à 700°C.

### 2^{ème} échantillon

Le mode opératoire du 1^{er} échantillon a été reproduit en utilisant un titanate nanométrique Li₄Ti₅O₁₂ (130 m²/g à la place de celui obtenu par voie sol-gel, pour préparer un matériau C-Li₄Ti₅O₁₂.

On a reproduit les 4 échantillons de l'exemple 9a en remplaçant C-LiFePO₄ (PL) par le matériau C-Li₄Ti₅O₁₂ obtenu par les deux procédés ci-dessus, pour obtenir des matériaux MC-Li₄Ti₅O₁₂ portant respectivement des groupes SO₃K, COOK, SO₃Li et COOLi.

### Exemple 11a

On a chauffé sous reflux 100 g de C-LiFePO₄(PL) dans 500 ml d'eau sous agitation, on a ajouté 4,3 g d'acide 4-aminobenzènesulfonique et 3,4 g d'acide benzoïque, puis 4,3 g de nitrite de potassium en plusieurs fois. Après 30 min sous reflux, on a refroidi le milieu réactionnel et on l'a centrifugé. Le produit récupéré a été lavé plusieurs fois à l'eau dans un bain à ultra sons, puis séché sous vide à 80°C pendant 24 h. On a obtenu un matériau MC-LiFePO₄ portant des groupes -SO₃K et des groupes -COOK.

### Exemple 12a

### 1^{er} échantillon

On a chauffé sous reflux 100 g de C-LiFePO₄(PL) dans 500 ml d'eau sous agitation, on a ajouté 17,3 g d'acide 4-aminobenzènesulfonique, puis 20 ml de nitrite de tert-butyle en 15 min. Après 30 min sous reflux, on a refroidi le milieu réactionnel et on l'a centrifugé. Le produit récupéré a été lavé plusieurs fois à l'eau dans un bain à ultra sons, puis séché sous vide à 80°C pendant 24 H. On a obtenu un matériau MC-LiFePO₄ portant des groupes -SO₃H.

### 2^{ème} échantillon

Le mode opératoire du 1^{er} échantillon a été reproduit en utilisant 13,7 g d'acide 4-aminobenzoïque, et on a obtenu un matériau MC-LiFePO₄ portant des groupes -CO₂H.

### 3^{ème} échantillon

Le mode opératoire du 1^{er} échantillon a été reproduit, en utilisant l'acide 5-aminobenzène-1,3-dicarboxylique. On a obtenu un matériau MC-LiFePO₄ portant des groupes -CO₂H.

### Exemple 13a

On a reproduit les 3 échantillons de l'exemple 12a en remplaçant C-LiFePP₄ (PL) par C-Li₄Ti₅O₁₂ préparé selon le mode opératoire décrit dans l'exemple 10a, pour obtenir des matériaux MC-Li₄Ti₅O₁₂ portant respectivement des groupes SO₃H et COOH.

### Exemple 14a

On a chauffé pendant 24 h sous reflux sous agitation 200 g de C-LiFePO₄(PL) dans 600 ml d'eau, en présence de 20 g de sel de monolithium de l'acide acétylène dicarboxylique. Le produit récupéré par filtration a été lavé plusieurs fois à l'eau, puis séché sous vide à 80°C pendant 24 h. On a obtenu un matériau MC-LiFePO₄ portant des groupes -COOLi et des groupes -COOH.

### Exemple 15a

On a reproduit le mode opératoire de l'exemple 12a en utilisant différents dérivés de l'aminobenzène au lieu de l'acide 4-aminobenzènesulfonique. On a ainsi obtenu un MC-LiFePO₄ portant les groupes identifiés dans le tableau suivant :

| **Précurseurs** | **Espèces greffées** |
|---|---|
| p-H₂N-φ-F | **C**-φ-F |
| p-H₂N-φ-Cl | **C**-φ-Cl |
| p-H₂N-φ-Br | **C**-φ-Br |
| p-H₂N-φ-NO₂ | **C**-φ-NO₂ |
| p-H₂N-φ-CO₂CH₃ | **C**-φ-CO₂CH₃ |
| p-H₂N-φ-CO₂C₂H₅ | **C**-φ-CO₂C₂H₅ |
| p-H₂N-φ-OH | **C**-φ-OH |
| p-H₂N-φ-tert-butyl | **C**-φ-tert-butyl |
| p-H₂N-φ-OC₈H₁₇ | **C**-φ-OC₈H₁₇ |
| 1-aminoanthraquinone | **C**-φ-1-aminoanthraquinone |
| 4'-Aminobenzo-15-crown-5 | **C**-benzo-15-crown-5 |

On a reproduit les échantillons en remplaçant C-LiFePO₄(PL) par le matériau C-Li₄Ti₅O₁₂, préparé selon les deux modes opératoires décrit dans l'exemple 10a, pour obtenir des matériaux MC-Li₄Ti₅O₁₂ portant respectivement les groupes décrits dans le tableau ci-dessus

### Exemple 16a

### 1^{er} échantillon

Dans un mortier, on a mélangé 0,1 mole de FePO₄•2H₂O, 0,05 mole de carbonate de lithium et 672 mg d'un terpolymère (acrylonitrile, méthacrylate, acide itaconique, 93:5,7:1,3) en solution dans 50 mL de diméthylformamide. Après séchage, on a soumis à une carbonisation le mélange par un traitement thermique consistant à chauffer à partir de la température ambiante jusqu'à 725°C avec une vitesse de 3°C/min sous atmosphère CO/CO₂, et en maintenant à la température de 725°C sous azote pendant 12 h. On a obtenu un matériau MC-LiFePO₄ portant des groupes -COOH et des groupes -OH.

### 2^{ème} échantillon

Le mode opératoire du 1^{er} échantillon a été reproduit en substituant le polymère en solution dans la DMF par une solution de 1 g d'acétate de cellulose dans 20 mL d'une solution à 5% en poids de LiSCN, et on a obtenu un matériau MC-LiFePO₄ portant des groupes -CO₂H et des groupes -OH.

### Exemple 1b

On a dispersé 10 g d'un MC-LiFePO₄ portant des groupes carboxyle, dans 50 ml d'une solution de 4 g d'éther monallyl polyalkylène glycol A 20-20. On a refroidi le mélange à 0°C, puis on a ajouté lentement en 30 min, 5 ml d'une solution de 200 mg de 1,3-dicyclohexyl carbodiimide (DCC) dans l'acétate d'éthyle, puis de la pyridine en tant que catalyseur. Le mélange réactionnel a été maintenu sous agitation durant la nuit. La poudre récupérée après filtration a été lavée plusieurs fois à l'acétate d'éthyle et à l'eau. Le MC-LiFePO₄ obtenu porte des groupes allyle.

Le mode opératoire ci-dessus a été répété en remplaçant l'éther A20-20 successivement par 2 mmoles des composés suivants : alcool allylique, 1,6-hexanediol vinyl éther, méthacrylate de 2-hydroxyéthyle, N-(hydroxyméthyl)acrylamide, N-(4-hydroxyphényl)maléimide, éther de polyoxyéthylène alkylphényle Noigen^{®} RN-40. Les MC-LiFePO₄ obtenus portent respectivement des groupes allyle, vinyl éther, méthacrylate, acrylamide, maléimide et CH₃-CH=CH-φ-, qui sont des groupes polymérisables.

### Exemple 2b

On a fait réagir 2 g d'un MC-LiFePO₄ portant des groupes -SO₃Li avec 100 mg d'un chlorure de 1-éthyl-3-méthylimidazolium (EMI). Après filtration, le produit a été lavé plusieurs fois à l'eau. Le traitement a été répété cinq fois, puis le produit a été séché sous vide à 80°C. Le matériau MC-LiFePO₄ obtenu porte des groupes sulfonate de EMI.

Le mode opératoire ci-dessus a été répété en utilisant le chlorure de 1-butyl-1-méthylpyrrolidinium (BMP), et on a obtenu un MC-LiFePO₄ portant des groupes sulfonate de BMP.

### Exemple 3b

On a fait réagir dans l'eau 2 g d'un MC-LiFePO₄ portant des groupes -SO₃Li avec 100 mg d'un chlorure de diallyldiméthylammonium (DADMA). Après filtration, le produit a été lavé plusieurs fois à l'eau. Le traitement a été répété cinq fois, puis le produit a été séché sous vide à 80°C. Le matériau MC-LiFéPO₄ obtenu porte des groupes allyle.

Le mode opératoire ci-dessus a été répété en utilisant le chlorure de (2-méthylpropénoyloxyéthyl)triméthylammonium (META) et on a obtenu un MC-LiFePO₄ portant des groupes méthacrylate.

### Exemple 4b

### 1^{er} échantillon

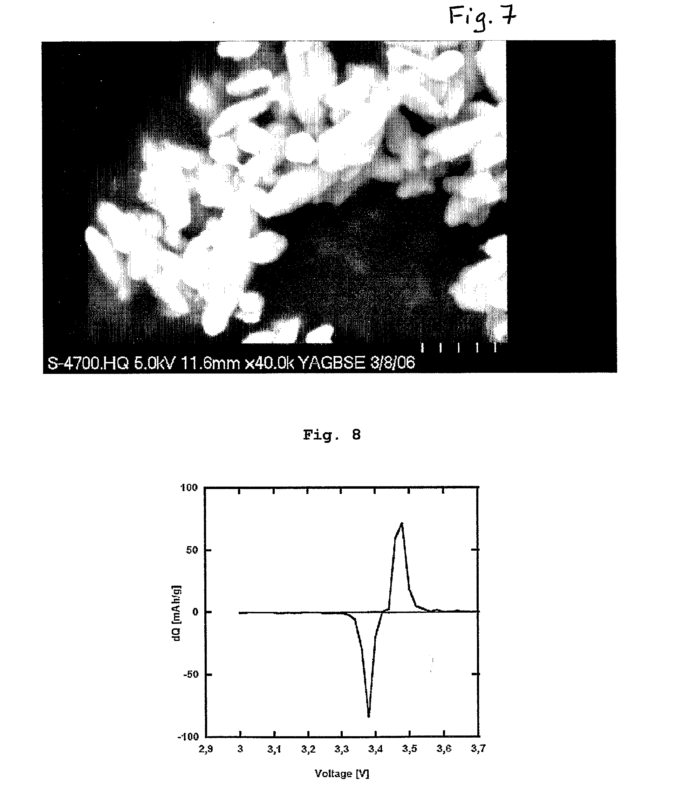

On a dissous 20 g de Jeffamine M-2070 dans 200 ml d'acétate d'éthyle, puis on a dispersé dans la solution obtenue, 20 g d'un MC-LiFePO₄ portant des groupes carboxyliques. Ensuite, on a ajouté lentement en 30 min, une solution de 400 mg de 1,3-dicyclohexyl carbodiimide dans 5 ml d'acétate d'éthyle. On a maintenu le mélange réactionnel sous agitation pendant 24 h à température ambiante, puis on a filtré. La poudre obtenue a été lavée plusieurs fois à l'acétate d'éthyle et à l'eau. Le matériau MC-LiFePO₄ ainsi obtenu porte des groupes Jeffamine M-2070 fixé par une liaison amine.
50 mg de ce produit ont ensuite été traité par 1 mL d'une solution de 1 g de triflate de bismuth dans 20 cc d'isopropanol, puis le produit lavé plusieurs fois à l'isopropanol et enfin séché. Le bismuth solvaté par la chaîne poly(oxyde d'éthylène) sert de marqueur et il est ainsi possible d'observer au microscope électronique la présence de polymères sous la forme de taches blanchâtre, tel que l'on peut l'observer sur la figure 7.

### 2^{ème} échantillon

Le mode opératoire du 1^{er} échantillon a été répété en utilisant 20 g du composé commercialisé sous la dénomination Surfonamine^{®} L-300. On a obtenu un matériau MC-LiFePO₄ portant des groupes Surfonamine^{®} L-300 fixés par une liaison amine.

### 3^{ème} échantillon

Le mode opératoire du 1^{er} échantillon a été répété en utilisant un matériau C-Li₄Ti₅O₁₂- On a obtenu un matériau MC-Li₄Ti₅O₁₂ portant des groupes Jeffamine M-2070 fixés par des liaison amide.

### Exemple 5b

### 1^{er} échantillon

Dans un appareil de Dean-Stark, on a mis sous reflux sous agitation 100 g de MC-LiFePO₄ portant des groupes -COOH et 10 g de poly(éthylèneglycol) méthacrylate (Mₙ ≈ 526) dans 600 ml de toluène. Après 1 h, on a ajouté à travers un septum, 100 mg de TYZOR® TPT et on a laissé le milieu réactionnel sous reflux durant une nuit. Le produit récupéré par filtration a été lavé plusieurs fois dans l'eau, puis séché sous vide à température ambiante pendant 48 h. On a obtenu un matériau MC-LiFePO₄ portant des groupes méthacrylate.

### 2^{ème} échantillon

On a reproduit le mode opératoire du 1^{er} échantillon en utilisant 10 g de 1,2-butoxylate-block-ethoxylate de l'alcool allylique HLB 6.9. On a obtenu un matériau MC-LiFePO₄ portant des groupes allyloxy.

### 3^{ème} échantillon

On a reproduit le mode opératoire du 1^{er} échantillon en utilisant un matériau C-Li₄Ti₅O₁₂ et on a obtenu un matériau MC-Li₄Ti₅O₁₂ portant des groupes méthacrylate.

### 4^{ème} échantillon

On a reproduit le mode opératoire du 2ème échantillon en utilisant un matériau C-Li₄Ti₅O₁₂ et on a obtenu un matériau MC-Li₄Ti₅O₁₂ portant des groupes allyloxy.

### 5^{ème} échantillon

On a reproduit le mode opératoire de du 1^{er} échantillon, en remplaçant le poly(éthylèneglycol) méthacrylate par la Jeffamine M-2070. On a obtenu un matériau MC-LiFePO₄ portant des groupes Jeffamine M-2070 fixé par une liaison amide.

### 6^{ème} échantillon

On a reproduit le mode opératoire de du 1^{er} échantillon, en remplaçant le poly(éthylèneglycol) méthacrylate par la Surfonamine® L-300. On a obtenu un matériau MC-LiFePO₄ portant des groupes Surfonamine® L-300fixé par une liaison amide

### Exemple 6b

On a dispersé 10 g de MC-LiFePO₄ portant des groupes hydroxyle dans 50 ml de dichlorométhane, et on a fait réagir pendant 24 h avec 1 g d'épichlorhydrine en présence de 1 ml de pyridine. Le produit récupéré par filtration a été lavé plusieurs fois au dichlorométhane, puis séché sous vide à température ambiante pendant 48 h. Le matériau MC-LiFePO₄ obtenu porte des groupes époxy.

### Exemple 7b

### 1^{er} échantillon

On a dispersé 10 g de MC-LiFePO₄ portant des groupes carboxyle dans 50 ml d'un mélange dioxane-n-heptane (60/40 en vol), et on a fait réagir pendant 4 h avec 1 g de méthacrylate de glycidyle en présence de 200 µl de triéthylamine. Le produit récupéré par filtration a été lavé plusieurs fois par un mélange dioxane-n-heptane, puis séché sous vide à température ambiante pendant 48 h. Le matériau MC-LiFePO₄ obtenu porte des groupes méthacrylate.

### 2^{ème} échantillon

On a reproduit le mode opératoire du 1^{er} échantillon, en utilisant 10 g de C-Li₄Ti₅O₁₂ portant des groupes carboxyle et on a obtenu un matériau MC-Li₄Ti₅O₁₂ portant des groupes méthacrylate.

### Exemple 8b

On a dispersé 10 g de MC-LiFePO₄ portant des groupes carboxyle et 1 g dans 50 ml d'acétate d'éthyle, et on a fait réagir pendant 4 h avec 1 g de 2,2'-Azobis[2-méthyl-N-(2-hydroxyéthyl)propionamide] (fourni par la société Wako Pure Chemical Industries, Japon). Le mélange a été refroidi à 0°C, puis on a ajouté lentement en 30 min, 800 mg de 1,3-dicyclohexyl carbodiimide en solution dans 5 ml d'acétate d'éthyle, puis 40 mg de 4-diméthylaminopridine comme catalyseur. On a ainsi obtenu le greffage par une liaison ester du 2,2'-Azobis[2-méthyl-N-(2-hydroxyéthyl)propionamide].

Le produit récupéré par filtration a été lavé plusieurs fois à l'acétate d'éthyle et à l'eau, puis séché sous vide à température ambiante pendant 24 h. Le matériau MC-LiFePO₄ obtenu porte des groupes azo qui peuvent initier une polymérisation par voie radicalaire.

### Exemple 9b

On a dispersé dans 50 ml de diméthylformamide (DMF), 10 g du matériau MC-LiFeP04 portant des groupes azo obtenu selon le procédé de l'exemple 8b et 2 g de méthacrylate de glycidyle. On a fait passer un courant d'argon dans le milieu réactionnel pendant 1 h, puis on a chauffé à 100°C pendant 3 h.

Le produit récupéré par filtration a été lavé plusieurs fois au DMF et à l'acétone, puis séché sous vide à température ambiante pendant 24 h. Le matériau MC-LiFePO₄ obtenu porte des groupes polyacrylate qui ont des groupes époxy pendants.

### Exemple 10b

Dans une boîte à gants sous argon, on a dispersé dans 30 ml de diméthylformamide (DMF), 10 g du matériau MC-LiFePO₄ portant des groupes COOK, 1,42 g de méthacrylate de glycidyle et 20 mg 18-crown-6. On a fait chauffé le milieu réactionnel sous agitation à 100°C pendant 4 h.

Le produit récupéré par filtration a été lavé plusieurs fois au DMF et à l'acétone, puis séché sous vide à température ambiante pendant 24 h. Le matériau MC-LiFePO₄ obtenu porte des groupes polyester qui ont des groupes méthacrylate pendants.

### Exemple 11b

On a mélangé dans 200 ml de toluène, 2,18 g de dianhydride de l'acide benzène-1,2,4,5-tétracarboxylique avec 24 g d'un poly(oxyéthylène)diamine XTJ-502 ayant une masse moléculaire M_{w} = 2130. Après 24 h sous reflux dans un appareil Dean-Stark, on a ajouté 50 g d'un MC-LiFePO₄ portant des groupes carboxyle. On a laissé sous reflux pendant 60 min supplémentaires, puis on a ajouté 500 mg de TYZOR TPT à travers un septum, et on a laissé la réaction se poursuivre sous reflux durant la nuit. La poudre obtenue par centrifugation a été lavée plusieurs fois au toluène, puis séchée sous vide à température ambiante pendant 48 h. On a ainsi obtenu un matériau MC-LiFePO₄ portant des groupes polymère rédox poly(dianhydride de l'acide benzène-1,2,4,5-tétracarboxylique-co-polyoxyéthylènediamine).

### Exemple 12b

On a mélangé dans 200 ml de toluène, 2,18 g de dianhydride de l'acide benzène-1,2,4,5-tétracarboxylique avec 24 g de poly(oxyéthylène)diamine XTJ-502. Après 24 h sous reflux dans un appareil Dean-Stark, on a ajouté 50 g d'un MC-LiFePO₄ portant des groupes carboxyle. On a laissé sous reflux pendant 60 min supplémentaires, puis on a ajouté 500 mg de TYZOR TPT à travers un septum, et on a laissé la réaction se poursuivre sous reflux durant la nuit. La poudre obtenue par centrifugation a été lavée plusieurs fois au toluène, puis séchée sous vide à température ambiante pendant 48 h. On a ainsi obtenu un matériau MC-LiFePO₄ portant des groupes polymère rédox poly(dianhydride de l'acide benzène-1,2,4,5-tétracarboxylique-co-polyoxyéthylènediamine).

### Exemple 1c

### 1^{er} échantillon

Dans une boîte à gants, on a mélangé dans 15 ml d'acétate d'éthyle : 3 g de MC-LiFePO₄ préparé selon l'exemple 1b; 250 mg de particules de graphite EBN-1010 ; 1,7 g d'un terpolymère oxyde d'éthylène, méthyl-glycidyl éther et allylglycidyl éther (rapport molaire 80:15:5) ; et 500 mg de diacrylate de polyéthylène glycol (600). On a maintenu ce mélange sous agitation à température ambiante pendant environ 12 h, puis on a ajouté 17,5 mg d'un composé obtenu par échange d'ion entre LiTFSI et le 2,2'-azobis[2-(2-imidazolin-2-yl) propane] bis(trifluorométhanesulfonyl)imide (TFSI) et on a maintenu le mélange sous agitation pendant 90 min.

La composition ainsi obtenue est appliquée sous forme d'un film de 30 µm d'épaisseur sur un feuillard d'aluminium (qui servira de collecteur de courant pour une électrode), puis chauffé sous atmosphère inerte pendant 80°C pendant 24 h. On obtient ainsi une électrode (cathode) pour batterie, comprenant un MC-LiFePO₄ dans un réseau interpénétré formé entre le MC-LiFePO₄ et des polymères.

### 2^{ème} échantillon

On a reproduit le mode opératoire utilisé pour le 1^{er} échantillon, en utilisant un matériau MC-Li₄Ti₅O₁₂ portant des groupes allyle. On obtient ainsi une électrode (anode) pour batterie, comprenant un MC-Li₄Ti₅O₁₂ dans un réseau interpénétré formé entre le MC-Li₄Ti₅O₁₂ et des polymères.

### Exemple 2c

On préparé un mélange contenant 8 g d'un MC-LiFePO₄ portant des groupes carboxyle, 1 g de particules de graphite EBN-1010 et une solution aqueuse contenant 4 g de polyoxazoline EPOCROS WS-700.

La composition ainsi obtenue est appliquée sous forme d'un film de 60 µm d'épaisseur sur un substrat, puis chauffé sous atmosphère inerte pendant 120°C pendant 1 h. On obtient ainsi une cathode pour batterie Lithium-ion, dans lequel le liant est relié à MC-LiFePO₄ par une liaison formée par la réaction de l'oxazoline et des groupes -COOH.

### Exemple 3c

### 1^{er} échantillon

On préparé un mélange contenant 1,8 g d'eau, 2,82 g d'un MC-LiFePO₄ portant des groupes COOH et des groupes OH, 12 mg de particules de graphite EBN-1010 et une suspension aqueuse contenant 40 mg d'un copolymère styrène-butadiène modifié LHB-108P.

La composition ainsi obtenue est appliquée sous forme d'un film de 50 µm d'épaisseur sur un substrat, puis chauffé sous air pendant 60°C pendant 2 h, puis sous atmosphère inerte à 80°C pendant 24 h. On obtient ainsi une cathode pour batterie.

### 2^{ème} échantillon

On a reproduit le mode opératoire du 1^{er} échantillon, en utilisant un matériau MC-Li₄Ti₅O₁₂ portant des groupes -SO₃Li, pour préparer un matériau de cathode.

### Exemple 4c

On a dispersé dans 50 ml de tétrahydrofurane (THF), 10 g d'un matériau MC-LiFePO₄ portant des groupes COOH et 1 g d'aziridine fraîchement distillée, et on a fait réagir sous agitation pendant 24 h à 50°C. Le produit récupéré par filtration a été lavé plusieurs fois au THF, puis séché sous vide à température ambiante pendant 24 h. Le matériau MC-LiFePO₄ obtenu porte des groupes amino.

On a préparé par polymérisation en émulsion une dispersion de 300 mg de nanoparticules de poly(méthacrylate de glycidyle), d'un diamètre de 10-20 nm dans 5 ml d'eau par le procédé décrit dans "Synthesis and curing of poly(glycidyl methacrylate) nanoparticles, Jyongsik Jang, Joonwon Bae, Sungrok Ko, Journal of Polymer Science Part A : Polymer Chemistry, Volume 43, Issue 11, 2005, Pages 2258-2265".

On préparé un mélange contenant 10 g du MC-LiFePO₄ portant des groupes amino, 1 g de particules de graphite EBN-1010 et la dispersion de nanoparticules de poly(méthacrylate de glycidyle).

La composition ainsi obtenue est appliquée sous forme d'un film de 60 µm d'épaisseur sur un substrat, puis chauffé à 120°C sous air sec pendant 1 h. On obtient ainsi un matériau de cathode pour batterie Lithium-ion, dans lequel le matériau MC-LiFePO₄ est lié à un polymère par la liaison formée entre un groupe époxy et un groupe amino.

### Exemple 5c

On a dispersé dans 50 ml d'eau, 10 g d'un matériau MC-LiFePO₄ portant des groupes azo obtenu selon le procédé de l'exemple 8b et 1 g d'acide 4-styrène sulfonique (obtenu à partir de 4-styrènesulfonate de sodium). On a fait passer un courant d'argon dans le milieu réactionnel à travers un septum pendant 1 h, puis on a chauffé à 70°C pendant 4 h.

Le produit récupéré par filtration a été lavé plusieurs fois à l'eau, puis séché sous vide à température ambiante pendant 24 h. Le matériau MC-LiFePO₄ obtenu porte des groupes poly(acide sulfonique).

Ce matériau a été dispersé sous agitation dans 50 ml d'eau contenant 1 g de 3,4-éthylènedioxythiophène (EDOT) Après 10 min, on a ajouté 2 g de persulfate d'ammonium. Après 24 h de réaction à 30°C, on a récupéré une poudre qui a été lavée plusieurs fois à l'eau et au méthanol, puis séchée sous vide pendant 24 h à température ambiante. On a ainsi obtenu un matériau MC-LiFePO₄ qui porte des groupements polymères [poly(3,4-éthylènedioxythiophène) /poly(styrène sulfonate) PEDT/PSS qui ont une conductivité intrinsèque.

### Exemple 6c

Un lot de LiFePO₄ dopé au molybdène a été synthétisé en fondant pendant une heure, sous argon à 1000°C et dans un creuset en graphite, 1 mole de Fe₂O₃, 2 moles de (NH₄)₂HPO₄, 1 mole de Li₂CO₃ et 0,06 mole Li₂MoO₄. Le LiFePO₄ dopé au molybdène LiFeMoPO₄ (94% de pureté par rayons X) a ensuite été broyé à une taille moyenne de 1 µm. 50 g de la poudre de LiFeMoPO₄ a ensuite été mélangé dans un mortier avec 2,5 g d'acétate de cellulose en solution dans l'eau. Après évaporation de l'eau, le produit a été carbonisé sous CO₂ à 800°C pendant 4 h. On a obtenu un matériau MC-LiFeMoPO₄ qui porte des groupes -COOH et -OH. 10 g de MC-LiFeMoPO₄ ont ensuite été traité dans le THF pendant 8 h avec du poly(propylène glycol) terminé par du tolyléne 2-4-diisocyanate (Mₙ∼2300, produit Aldrich; 3 g), puis lavé 24 h dans un soxhlet avec du THF. On a ainsi obtenu un MC-LiFeMoPO₄ qui porte des groupes isocyanate. 10 g de ce MC-LiFeMoPO₄ a ensuite été mélangé avec 1 g de graphite EBN-1010 dans le THF. Préalablement à l'enduction, 20 mg de trimethylolpropane ethoxylate (M_{w} = 730, produit Aldrich; 20 mg) ont été ajoutés à la solution. Aprés avoir été coulé sur une plaque de téflon dans une boîte à gants, le film est chauffé à 60°C pendant 2 h. On a ainsi obtenu une cathode autosupportée avec des liens obtenus par réaction des isocyanates avec les functions -OH.

### Exemple 7c

Dans un mélangeur (Haake Rheocorder), on a introduit un mélange de MC-LiFePO₄ portant des fonctions -SO₃Li (36% en poids), tel que préparé à l'exemple 9a, de poly(oxyde d'éthylène) de masse 100,000 (59% en poids), de graphite EBN-1010 (2,5% en poids) et de noir de Schawinigan (2,5% en poids). Le mélange a ensuite été effectué à 100°C avec une vitesse de 50 tours/mn tout en enregistrant le couple (N.m). Un essai similaire a été effectué en remplaçant le MC-LiFePO₄ portant des fonctions -SO₃Li par l'homologue C-LiFePO₄ non traité. On a ainsi pu mettre en évidence l'effet bénéfique de la présence des groupements -SO₃Li par la diminution du couple mesuré, indiquant une plus grande facilité de mise en oeuvre du mélange par extrusion.

### Exemple 8c

Une pile bouton a été assemblée en boîte à gants en utilisant une cathode telle que préparée dans le premier échantillon de l'exemple 1c un film d'électrolyte de poly(oxyde d'éthylène) 5.10⁶ contenant 30% en poids de LiTFSI et une pastille de lithium comme anode. La batterie a été testée à l'aide d'un potensiostat VMP2 (Bio-Logic - Science Instruments) à 80°C et une vitesse de balayage de 20 mV/h entre 3 et 3,7 V vs Li⁺/Li⁰. La voltamétrie cyclique correspondante est donnée sur la figure 8.

### Exemple 9c

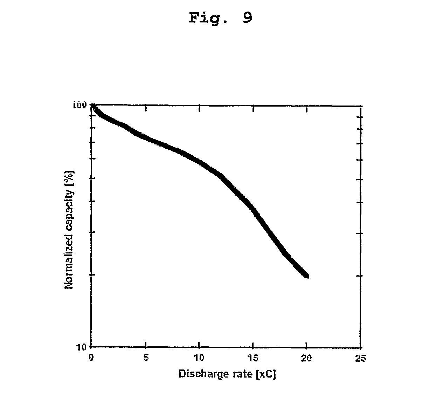

Une pile bouton a été assemblée avec une cathode composite telle que préparée à l'exemple 4c, un séparateur de 25 µm en Celgard^{®}, une anode de lithium métallique et un électrolyte 1M LiPF₆ dans EC:DMC (1:1) imprégnant le tout. Une première voltamétrie cyclique entre 3 V et 3,7 V vs Li+/Li⁰ est effectué à température ambiante pour déterminer la capacité de l'électrode. Puis des essais de puissance ont été effectués en intensiostatique pour déterminer la caractéristique énergie/puissance de la batterie telle que décrit dans la figure 9.

## Revendications

1. Matériau d'électrode constitué par des particules ou des agrégats de particules d'un oxyde complexe qui a des propriétés rédox et qui peut insérer réversiblement le cation lithium, dans lequel au moins une partie de la surface des particules ou des agrégats de particules d'oxyde complexe est revêtue par une couche de carbone fixée par des liaisons chimiques et/ou des liaisons physiques et éventuellement par accrochage mécanique, **caractérisé en ce que** :
a) L'oxyde complexe répond à la formule LiᵢMₘM'_{m'}Z_{z}OₒNₙF_{f} (I) dans laquelle :
- Li, 0, N et F représentent respectivement le lithium, l'oxygène, l'azote et le fluor ;
- M représente un ou plusieurs éléments choisis parmi les métaux de transition,
- M' représente un ou plusieurs métaux autres qu'un métal de transition ;
- Z représente au moins un non métal ;
- les coefficients i, m, m', z, o, n et f sont choisis de manière à assurer l'électroneutralité de l'oxyde complexe, et respectent les conditions suivantes :
i ≥ 0, m > 0, z ≥0, m' ≥0, o 0, n ≥ 0 et f ≥ 0 ;
b) le carbone porte des groupes fonctionnels GF fixés par liaison covalente ;
c) La dimension des particules et des agrégats de particules d'oxyde complexe carboné est telle que au moins 90% des particules ont une dimension entre 1 nm et 5 µm, et si les particules sont présentes sous forme d'agrégats, au moins 90% des agrégats de particules ont une dimension entre 10 nm et 10 µm.

2. Matériau selon la revendication 1, **caractérisé en ce que** M représente un ou plusieurs métaux de transition M1 choisis parmi le fer, le manganèse, le vanadium, et le titane.

3. Matériau selon la revendication 2, **caractérisé en ce que** le(s) métal(métaux) M1 est (sont) remplacé(s) partiellement par un ou plusieurs métaux de transition M2 choisis parmi le molybdène, le nickel, le chrome, le cobalt, le zirconium, le tantale, le cuivre, l'argent le niobium, le scandium, le zinc et le tungstène, le rapport en poids des métaux M1 aux métaux M2 étant supérieur à 1.

4. Matériau selon la revendication 1, **caractérisé en ce que** le métal M' est choisi parmi Li, Al, Ca, Mg, Pb, Ba, In, Be, Sr, La Sn et Bi.

5. Matériau selon la revendication 1, **caractérisé en ce que** l'élément non métal Z est choisi parmi S, Se, P, As, Si, et Ge.

6. Matériau selon la revendication 1, **caractérisé en ce que** l'oxyde complexe répond à la formule générale (I) LiᵢMₘM'_{m'}Z_{z}OₒNₙF_{f} dans laquelle i > 0.

7. Matériau selon la revendication 1, **caractérisé en ce que** l'oxyde complexe répond à la formule LiᵢMₘM'_{m'}OₒNₙF_{f}.

8. Matériau selon la revendication 7, **caractérisé en ce que** l'oxyde complexe est un titanate de formule LiᵢTiₘM'_{m'}OₒNₙF_{f}.

9. Matériau selon la revendication 1, **caractérisé en ce que** l'oxyde complexe répond à la formule LiᵢMₘM'_{m'}Z_{z}OₒNₙF_{f} dans laquelle 0.

10. Matériau selon la revendication 9, **caractérisé en ce que** l'oxyde complexe est choisi parmi les oxydes qui répondent à la formule générale LiMM'ZO₄ et qui présentent une structure olivine ou parmi les matériaux qui répondent à la formule générale Li₃₊ₓ(MM')₂(ZO₄)₃ et qui présentent la structure Nasicon, lesdits oxydes complexes comprenant les oxydes complexes qui ont des écarts à la stoechiométrie inférieurs à 5%, un taux d'impuretés chimiques inférieur à 2% et un taux d'éléments de substitution des sites cristallins M inférieur à 20%, ainsi que les oxydes complexes dans lesquels les polyanions ZO₄ sont partiellement remplacés par polyanions molybdénate, niobate, tungstate, zirconate ou tantalate à un taux inférieur à 5%.

11. Matériau selon la revendication 10, **caractérisé en ce que** Z représente le phosphore, 0 et/ou 0.

12. Matériau selon la revendication 11, **caractérisé en ce que** l'oxyde complexe est un phosphate, un pyrophosphate ou un oxyphosphate.

13. Matériau selon la revendication 12, **caractérisé en ce que** l'oxyde complexe est LiFePO₄ ou l'oxyde complexe répond à la formule LiFe₁₋ₓMgₓPO₄ dans lequel x varie entre 0,1% et 5% at.

14. Matériau selon la revendication 9, **caractérisé en ce que** l'oxyde complexe répond à la formule I dans laquelle Z représente Si ou S.

15. Matériau selon la revendication 14, **caractérisé en ce que** l'oxyde complexe est un silicate, un sulfate ou un oxysulfate dans lesquels M1 est Fe, Mg ou un de leurs mélanges.

16. Matériau selon la revendication 10, **caractérisé en ce que** M est Fe ou Mn, o = 4, n = f = 0.

17. Matériau selon la revendication 1, **caractérisé en ce que** le groupe fonctionnel GF répond à au moins l'un des critères suivants :
- il possède un caractère hydrophile
- il constitue un segment polymère ;
- il présente des propriétés rédox et/ou une conductivité électronique
- il porte ou constitue une fonction FR capable de réagir par substitution, addition, condensation ou polymérisation, ou une fonction capable d'initier des réactions de polymérisations par voie anionique, cationique ou radicalaire ;
- il porte des groupements ioniques.

18. Matériau selon la revendication 17, **caractérisé en ce que** le groupe GF est un groupe ayant un caractère hydrophile choisi parmi les groupements ioniques et les groupements constitués par un segment polymère hydrophile.

19. Matériau selon la revendication 18, **caractérisé en ce \que** GF est un groupe ionique choisi parmi les groupes CO₂M, -OH, -SM, -SO₃M, -PO₃M₂, -PO₃M₂, -PO₂M et NH₂, dans lesquels M représente un proton, un cation de métal alcalin ou un cation organique.

20. Matériau selon la revendication 19, **caractérisé en ce que** le cation organique est choisi parmi les groupes oxonium, ammonium, ammonium quaternaire, amidinium, guanidinium, pyridinium, morpholinium, pyrrolidionium, imidazolium, imidazolinium, triazolium, sulfonium, phosphonium, iodonium et carbonium, lesdits groupes portant éventuellement au moins un substituant ayant une fonction FR capable de réagir par susbtitution, addition, condensation ou polymérisation.

21. Matériau selon la revendicatin 18, **caractérisé en ce que** GF est un groupe dérivé d'un polymère hydrophile.

22. Matériau selon la revendication 21, c**aractérisé en ce que** le polymère hydrophile est un polyalkylène comportant des hétéroatomes tels que l'oxygène, le soufre, l'azote.

23. Matériau selon la revendication 22, **caractérisé en ce que** le polymère hydrophile est un poly(oxyéthylène), de poly(éthylèneimine), un alcool polyvinylique, ou un ionomère ayant dans sa chaîne macromoléculaire des groupes acrylate, des groupes styrènecarboxylate, des groupes styrènesulfonate, des groupes allylamine, ou des groupes alcool allylique.

24. Matériau selon la revendication 17, **caractérisé en ce que** GF est un groupe polymère qui comprend un ou plusieurs segments choisi par un poly(oxyéthylène), un segment à propriétés élastomères, et un segment qui a des doubles liaisons conjugées capables d'assurer une conduction électronique.

25. Matériau selon la revendication 17, **caractérisé en ce que** le groupe FR est choisi parmi les groupes isocyanate, époxyde, aziridine, thiaaziridine, amine, oxazoline, carboxyle, carboxylate, hydroxyle, chlore, et C=C<.

26. Matériau selon la revendication 1, **caractérisé en ce que** la couche de carbone représente de 0,1 à 10% par rapport au matériau.

27. Matériau selon la revendication 1, **caractérisé en ce qu**'il porte de 0,0001 à 1 meq de fonctions GF par gramme de matériau.

28. Matériau selon la revendication 1, **caractérisé en ce que** la couche de carbone est non poudreuse et adhérente a l'oxyde complexe.

29. Matériau selon la revendication 1, **caractérisé en ce que** la couche de carbone comporte des nanotubes de carbone.

30. Procédé de préparation d'un matériau selon la revendication 1, **caractérisé en ce qu**'il comprend :
a) La préparation de particules ou d'agrégats de particules d'un oxyde complexe tels que au moins 90% des particules ont une dimension entre 1 nm et 5 µm et au moins 90% des agrégats de particules ont une dimension entre 10 nm et 10 µm, ledit oxyde complexe répondant à la formule LiᵢMₘM'_{m'}Z_{z}OₒNₙF_{f} dans laquelle :
- Li, O, N et F représentent respectivement le lithium, l'oxygène, l'azote et le fluor ;
- M représente un ou plusieurs éléments choisis parmi les métaux de transition,
- M' représente un ou plusieurs métaux autres qu'un métal de transition ;
- Z représente au moins un élément autre qu'un métal ;
- les coefficients i, m, m', z, o, n et f sont choisis de manière à assurer l'électroneutralité de l'oxyde complexe, et respectent les conditions suivante i ≥ 0, m > 0, z ≥0, m' ≥0, o > 0, n ≥ 0 et f ≥ 0 ;
b) le dépôt de carbone sur au moins une partie de la surface des particules ou des agrégats de particules d'oxyde complexe ou sur au moins une partie de la surface des précurseurs des particules ou des agrégats de particules de l'oxyde complexe ;
c) la fixation de groupes fonctionnels GF par formation d'une liaison covalente avec le carbone ;
étant entendu que les étapes peuvent être effectuées successivement ou simultanément.

31. Procédé selon la revendication 30, **caractérisé en ce que** les phases a), b) et c) sont effectuées en trois étapes successives au cours desquelles d'abord on prépare l'oxyde complexe, puis on applique le revêtement carboné sur les particules ou les agrégats de particules d'oxyde complexe, et enfin on soumet les particules ou les agrégats de particules carbonées à un traitement visant à fixer des groupes fonctionnels GF.

32. Procédé selon la revendication 31, **caractérisé en ce que** le revêtement carboné est appliqué par carbonisation d'un précurseur.

33. Procédé selon la revendication 32, **caractérisé en ce que** le précurseur est mélangé, préalablement à la carbonisation, avec des particules ou des fibres de carbone, incluant les nanotubes de carbone, contenant éventuellement des groupements GF.

34. Procédé selon la revendication 31, **caractérisé en ce que** l'application du revêtement carboné est effectuée par mécanofusion.

35. Procédé selon la revendication 30, **caractérisé en ce que** la préparation des particules ou des agrégats de particules d'oxyde complexe et le dépôt de carbone sont effectués simultanément pour préparer un oxyde complexe carboné, et la fixation des groupes GF est effectuée sur l'oxyde complexe carboné.

36. Procédé selon la revendication 35, **caractérisé en ce que** l'oxyde complexe carboné est obtenu en effectuant la synthèse du l'oxyde complexe à partir des précurseurs de l'oxyde complexe et d'un ou plusieurs précurseurs de carbone.

37. Procédé selon la revendication 30, **caractérisé en ce qu**'on forme simultanément un dépôt de carbone et des groupes GF sur des particules ou des agrégats de particules d'oxyde complexe préparés au préalable.

38. Procédé selon la revendication 37, **caractérisé en ce que** les groupes GF sont des groupes carboxylate, hydroxyle, cétone ou aldéhyde, et leur greffage est effectué par oxydation du carbone par le CO₂, éventuellement en présence de vapeur d'eau.

39. Procédé selon la revendication 30, **caractérisé en ce que** les groupes GF sont des groupes carboxylate, hydroxyle, cétone ou aldéhyde et les étapes a), b) et c) du procédé sont effectuées simultanément.

40. Procédé selon la revendication 30, **caractérisé en ce que** le carbone est appliqué par carbonisation d'un précurseur préalablement mis en contact avec les particules d'oxyde complexe.

41. Procédé selon la revendication 40, **caractérisé en ce que** le précurseur est sous forme d'un précurseur liquide, d'un précurseur gazeux ou d'un précurseur solide utilisé à l'état fondu ou en solution dans un solvant liquide.

42. Procédé selon la revendication 40, **caractérisé en ce que** la carbonisation est une dismutation de CO, une déshydrogénation d'un hydrocarbure, une déshalogénation ou une déshydrohalogénation d'un hydrocarbure halogéné, ou un crackage d'un hydrocarbure.

43. Procédé selon la revendication 40, **caractérisé en ce que** le précurseur est mélangé, préalablement à la carbonisation, avec des particules ou des fibres de carbones, incluant les nanotubes de carbone, contenant éventuellement des groupements GF.

44. Procédé selon la revendication 30, **caractérisé en ce que** la couche de carbone est déposée par par mécanofusion.

45. Electrode composite constituée par un matériau composite déposé sur un collecteur de courant, **caractérisée en ce que** le matériau composite comprend un matériau d'électrode selon la revendication 1, et évententuellement un liant et/ou un agent conférant une conductivité électronique et/ou un agent conférant une conductivité ionique.

46. Electrode selon la revendication 45, caractérisé en que que le matériau d'électrode porte des groupes GF à caractère hydrophile.

47. Electrode selon la revendication 45, **caractérisé en ce que** le matériau composite comprend le matériau d'électrode et un liant.

48. Electrode selon la revendication 47, **caractérisé en ce que** le liant est choisi parmi les caoutchoucs naturels et les caoutchoucs synthétiques tels que les caoutchoucs SBR (styrène butadiène rubber), NBR (butadiène-acrylonitrile-rubber), HNBR (NBR hydrogénés), CHR (épichlorhydrines rubber) et ACM (acrylate rubber).

49. Electrode selon la revendication 47, **caractérisé en ce que** le matériau composite déposé sur un collecteur de courant, est constitué de particules ou agrégats de particules d'oxyde complexe carboné reliés à des nanoparticules de liant.

50. Electrode selon la revendication 49, **caractérisé en ce que** les nanoparticules de liant ont un diamétre < 50 nm.

51. Electrode selon la revendication 45, **caractérisée en ce que** le matériau composite déposé sur un collecteur de courant comprend un matériau d'électrode qui porte des groupes GF du type polymère et éventuellement des groupes GF qui ont un caractère hydrophile.

52. Electrode selon la revendication 49, **caractérisé en ce que** les groupes GF du type polymère sont constitués par un segment poly(oxyéthylène), ou un segment à doubles liaisons conjugées.

53. Electrode selon la revendication 45, **caractérisée en ce que** le matériau composite qui est déposé sur un collecteur de courant est constitué par des particules d'oxyde complexe enrobées par du carbone et reliées entre elles par liaison covalente ou par liaison ionique.

54. Electrode selon la revendication 45, **caractérisée en ce que** l'oxyde complexe est LiFe₁₋ₓMgₓPO₄ dans lequel x varie entre 0,1% et 5% at. ou LiFePO₄.

55. electrode selon la revendication 54, **caractérisé en ce que** la couche de carbone porte des groupes GF choisis parmi -COOH, C=O, -OH et -CHO.

56. Electrode selon la revendication 45, **caractérisée en ce que** l'oxyde ou particulièrement Li₄Ti₅O₁₂.

57. Procédé d'élaboration d'une électrode selon la revendication 48, **caractérisé en ce que** le liant est incorporé au matériau d'électrode par mélange mécanique en présence d'un solvant.

58. Procédé d'élaboration d'une électrode selon la revendication 48, **caractérisé en ce que**
· Le matériau d'électrode porte des groupes GF qui sont ou qui portent une fonction FR facilitant la dispersion des particules ou agrégats d'oxydes complexe carboné fonctionnalisé, et des groupes GFa qui sont ou qui portent une fonction FRa capable de réagir par addition ou condensation ;
· Le liant porte des groupes réactifs GA capables de réagir par addition ou condensation avec les groupes FRa du matériau I ;
· Les particules ou agrégats de particules de matériau I sont dispersés dans une suspension colloïdale de nanoparticules de liant ;
· La dispersion est enduite sur un substrat qui constitue le collecteur de courant de l'électrode ;
· La dispersion est soumise à un traitement visant à faire réagir les fonctions FR avec les groupes GA.

59. Procédé d'élaboration d'une électrode selon la revendication 51, **caractérisé en ce que** :
**·** On prépare un matériau composite à partir d'un matériau d'électrode qui porte des groupes GF qui sont ou qui portent une fonction FR capable de réagir par addition ou condensation avec une fonction identique ;
**·** On applique le matériau composite sur un substrat qui constitue le collecteur de courant de l'électrode ;
**·** On soumet le matériau composite à un traitement visant à faire réagir les fonctions FR entre elles.

60. Générateur au lithium, constitué par un électrolyte comprenant un sel de lithium entre deux électrodes, et fonctionnant par échange d'ions lithium, **caractérisé en ce qu**'au moins l'une des électrodes est une électrode composite selon la revendication 45.

61. Générateur selon la revendication 57, **caractérisé en ce que** l'oxyde complexe de l'électrode répond à la formule LiᵢMₘM'_{m'}OₒNₙF_{f}, ladite électrode fonctionnant comme anode.

62. Générateur selon la revendication 57, **caractérisé en ce que** l'oxyde complexe de l'électrode répond à la formule LiᵢMₘM'_{m'}Z_{z}OₒNₙF_{f} dans laquelle 0, ladite électrode fonctionnant comme cathode.
